# EUROPEAN PATENT APPLICATION

(11) **EP 4 648 045 A1**
(43) Date of publication of application: **12.11.2025**
(21) Application number: 23919446.7
(22) Date of filing: 22.11.2023
(51) Int. Cl.: G10L 15/32, G10L 15/22

(54) **SOUND PICKUP METHOD AND ELECTRONIC DEVICE**

(30) Priority: 02.02.2023 CN 202310131440
(71) Applicant: Huawei Technologies Co., Ltd., Shenzhen, Guangdong 518129 (CN)
(72) Inventor: SHEN, Wenjing, Shenzhen, Guangdong 518129 (CN)
(74) Representative: Isarpatent
(86) International application number: PCT/CN2023/133336
(87) International publication number: WO 2024/159882

(57) **Abstract**

A sound pickup method and an electronic device (203) are disclosed, and relate to the field of terminal technologies. In the sound pickup method, at least one first electronic device among a plurality of electronic devices (203) receives a first speech instruction input by a user, and obtains an acoustic feature of the first speech instruction (S601). A host device (202) determines a sound pickup device from the plurality of electronic devices (203) based on at least one obtained acoustic feature (S603). The host device (202) sends a sound pickup instruction to the sound pickup device (S604). The sound pickup device performs a sound pickup operation in response to the sound pickup instruction (S605). In the sound pickup method, the plurality of electronic devices (203) are enabled to sequentially serve as a sound pickup device to pick up sound.

## Description

This application claims priority to Chinese Patent Application No. 202310131440.X, filed with the China National Intellectual Property Administration on February 2, 2023 and entitled "SOUND PICKUP METHOD AND ELECTRONIC DEVICE", which is incorporated herein by reference in its entirety.

### TECHNICAL FIELD

This application relates to the field of terminal technologies, and in particular, to a sound pickup method and an electronic device.

### BACKGROUND

With development of smart home technologies, a user or a family usually has a plurality of electronic devices with a speech interaction function. After detecting preset wake-up speech, the electronic devices enter an awake state. After detecting a task instruction input by the user, an electronic device in an awake state may perform a corresponding task to perform speech interaction with the user.

However, after waking up an electronic device, the user can input a task instruction only to the electronic device, and cannot input a task instruction to another electronic device that is not woken up.

### SUMMARY

Embodiments of this application provide a sound pickup method and an electronic device, to enable a plurality of electronic devices to sequentially serve as a sound pickup device to pick up sound.

The following technical solutions are used in embodiments of this application.

According to a first aspect, a sound pickup method is provided. In the method, at least one first electronic device among a plurality of electronic devices receives a first speech instruction input by a user, and obtains an acoustic feature of the first speech instruction. A host device obtains at least one acoustic feature that is collected by the at least one first electronic device and that corresponds to the first speech instruction. The host device determines a sound pickup device from the plurality of electronic devices based on the at least one acoustic feature. The host device sends a sound pickup instruction to the sound pickup device. Correspondingly, the sound pickup device performs a sound pickup operation in response to the sound pickup instruction.

In the foregoing sound pickup method, if the first speech instruction includes wake-up speech, after receiving the wake-up speech input by the user, the at least one first electronic device may obtain an acoustic feature of the wake-up speech. The host device determines a sound pickup device from the plurality of electronic devices based on at least one acoustic feature that is collected by the at least one first electronic device and that corresponds to the wake-up speech. The host device sends a sound pickup instruction to the sound pickup device. Correspondingly, the sound pickup device performs a sound pickup operation in response to the sound pickup instruction. For example, in response to the sound pickup instruction, the sound pickup device receives a task instruction subsequently input by the user.

It can be learned that, although an electronic device that detects the wake-up speech of the user is the first electronic device, a subsequent electronic device that serves as a sound pickup device may still be the first electronic device, or may be another electronic device that does not detect the wake-up speech input by the user. To be specific, the electronic device that detects the wake-up speech input by the user may be different from the subsequent electronic device that serves as a sound pickup device.

If the first speech instruction includes a task instruction, after receiving the task instruction input by the user, the at least one first electronic device may obtain an acoustic feature of the task instruction. The host device re-determines a sound pickup device from the plurality of electronic devices based on at least one acoustic feature that is collected by the at least one first electronic device and that corresponds to the task instruction. The host device sends a sound pickup instruction to the re-determined sound pickup device. Correspondingly, the re-determined sound pickup device performs a sound pickup operation in response to the sound pickup instruction. For example, in response to the sound pickup instruction, the re-determined sound pickup device receives a task instruction subsequently input by the user.

It can be learned that, although an electronic device that detects the task instruction of the user is the first electronic device, a subsequent electronic device that serves as a sound pickup device may still be the first electronic device, or may be another electronic device that does not detect the task instruction input by the user. To be specific, an initial electronic device that detects the task instruction input by the user may be different from a subsequent electronic device that serves as a sound pickup device to further perform detection on the task instruction input by the user, and the host device can determine, from the plurality of electronic devices sequentially, an electronic device serving as a sound pickup device.

In an implementation of the first aspect, during movement of the user, the at least one first electronic device receives the first speech instruction input by the user, and obtains the acoustic feature of the first speech instruction. The host device obtains at least one acoustic feature that is collected by the at least one first electronic device during movement of the user and that corresponds to the first speech instruction. The host device determines the sound pickup device from the plurality of electronic devices sequentially based on the at least one acoustic feature.

In the foregoing sound pickup method, with movement of the user, the at least one first electronic device receives the first speech instruction input by the user, and the obtained acoustic feature of the first speech instruction may alternatively change. The host device determines the sound pickup device from the plurality of electronic devices sequentially based on the at least one acoustic feature that is collected by the at least one first electronic device during movement of the user and that corresponds to the first speech instruction. During movement of the user, the sound pickup device determined by the host device has better sound pickup effect than another electronic device.

In an implementation of the first aspect, after the host device determines the sound pickup device from the plurality of electronic devices based on the at least one acoustic feature, the host device sends a sound pickup stop instruction to a non-sound-pickup device among the plurality of electronic devices. Correspondingly, the non-sound-pickup device performs a sound pickup stop operation in response to the sound pickup stop instruction.

In the foregoing sound pickup method, the host device sends the sound pickup stop instruction to the non-sound-pickup device, and the non-sound-pickup device performs the sound pickup stop operation in response to the sound pickup stop instruction. This can prevent the non-sound-pickup device from being in a sound pickup state, and reduce power consumption of the non-sound-pickup device.

In an implementation of the first aspect, the first speech instruction includes wake-up speech, and after the sound pickup device performs the sound pickup operation in response to the sound pickup instruction, the sound pickup device receives a second speech instruction input by the user, where the second speech instruction includes a task instruction. A server obtains the task instruction collected by the sound pickup device. The server determines an execution device from the plurality of electronic devices according to the task instruction. The server sends an execution instruction to the execution device. The execution device executes the task instruction according to the execution instruction.

In the foregoing sound pickup method, the sound pickup device may perform a speech-to-text conversion operation on the second speech instruction input by the user, and send obtained text to the server, and the server may parse semantics of the text obtained by the sound pickup device. Alternatively, the sound pickup device may send, to the server, the second speech instruction input by the user, and the server may perform a speech-to-text conversion operation on the second speech instruction collected by the sound pickup device, and parse semantics of obtained text.

The server determines the execution device based on the semantics of the text corresponding to the second speech instruction. Then the server sends the execution instruction to the execution device. The execution device executes the task instruction according to the execution instruction, to respond to the second speech instruction input by the user, to improve user experience.

In an implementation of the first aspect, the first speech instruction includes a task instruction, and after the at least one first electronic device among the plurality of electronic devices receives the first speech instruction input by the user, a server obtains the task instruction collected by the at least one first electronic device. The server determines an execution device from the plurality of electronic devices according to the task instruction. The server sends an execution instruction to the execution device. The execution device executes the task instruction according to the execution instruction.

In the foregoing sound pickup method, the first electronic device may perform a speech-to-text conversion operation on the first speech instruction input by the user, and send obtained text to the server, and the server may parse semantics of the text obtained by the first electronic device. Alternatively, the first electronic device may send, to the server, the first speech instruction input by the user, and the server may perform a speech-to-text conversion operation on the first speech instruction collected by the first electronic device, and parse semantics of obtained text. The server determines the execution device based on the semantics of the text corresponding to the first speech instruction. Then the server sends the execution instruction to the execution device. The execution device executes the task instruction according to the execution instruction, to respond to the first speech instruction input by the user, to improve user experience.

In an implementation of the first aspect, after the host device obtains the at least one acoustic feature that is collected by the at least one first electronic device and that corresponds to the first speech instruction, the host device determines a reply device from the plurality of electronic devices, the host device sends a reply instruction to the reply device, and the reply device performs a reply operation in response to the reply instruction.

Alternatively, after the host device determines the sound pickup device from the plurality of electronic devices based on the at least one acoustic feature, the host device sends a reply instruction to the sound pickup device, and the sound pickup device performs a reply operation in response to the reply instruction.

In the foregoing sound pickup method, the reply device determined by the host device may be the sound pickup device or any electronic device. For example, the reply device may be the first electronic device, or may not be the first electronic device. The reply device may be one or more preset electronic devices. Alternatively, after receiving acoustic features of the wake-up speech that are sent by a plurality of first electronic devices, the host device may determine a first electronic device corresponding to the 1^{st} received acoustic feature of the wake-up speech as the reply device. After determining the reply device, the host device sends a reply instruction to the reply device. After receiving the reply instruction sent by the host device, the reply device responds to a speech instruction (for example, the first speech instruction) input by the user, to improve user experience.

In an implementation of the first aspect, the acoustic feature includes at least one of an acoustic intensity feature and an acoustic source feature.

In the foregoing sound pickup method, the acoustic feature is a physical quantity for representing an acoustic characteristic of speech, and is also a general term for acoustic representations of various elements of sound. The acoustic feature includes but is not limited to at least one of the acoustic intensity feature and the acoustic source feature. The acoustic intensity feature represents sound intensity of a sound signal. Higher sound intensity of a sound signal detected by the first electronic device indicates a shorter distance between the sound signal and the corresponding first electronic device. The acoustic source feature represents a source of a sound signal (namely, an input direction of the sound signal).

The sound pickup device determined by the host device from the plurality of electronic devices based on the at least one acoustic feature that is collected by the at least one first electronic device and that corresponds to the first speech instruction has better sound pickup effect than another electronic device.

In an implementation of the first aspect, the host device determines the sound pickup device based on an acoustic intensity feature of the first speech instruction, an acoustic source feature of the first speech instruction, and a sound pickup rule.

In the foregoing sound pickup method, the sound pickup rule may be prestored on the host device, or the sound pickup rule may be generated by the host device after the host device is trained by using training data that includes an acoustic feature of wake-up speech. The sound pickup device determined by the host device based on the acoustic intensity feature of the first speech instruction, the acoustic source feature of the first speech instruction, and the sound pickup rule has better sound pickup effect than another electronic device.

In an implementation of the first aspect, before the at least one first electronic device among the plurality of electronic devices receives the first speech instruction input by the user, during movement of the user, the plurality of electronic devices receive a third speech instruction input by the user, and obtain acoustic features of the third speech instruction. The host device obtains a plurality of acoustic features that are collected by the plurality of electronic devices and that correspond to the third speech instruction. The host device determines the sound pickup rule based on the plurality of acoustic features. The sound pickup rule includes a correspondence between a plurality of acoustic intensity features corresponding to the third speech instruction, a plurality of acoustic source features corresponding to the third speech instruction, and the plurality of electronic devices.

In the foregoing sound pickup method, the user may move back and forth in space including the plurality of electronic devices, and continuously input the third speech instruction to the plurality of electronic devices. The third speech instruction may include at least one of wake-up speech and a task instruction.

When the third speech instruction includes the wake-up speech, the plurality of electronic devices may be in an awake state, or may not be in an awake state. An electronic device may receive a third speech instruction input to the electronic device by a user within a sound pickup range of the electronic device. When the third speech instruction includes the task instruction, an electronic device in an awake state may receive a third speech instruction input to the electronic device by a user within a sound pickup range of the electronic device.

After detecting the third speech instruction input by the user, the plurality of electronic devices may obtain the acoustic features of the third speech instruction, and send the acoustic features of the third speech instruction to the host device. The host device may draw, based on the acoustic features of the third speech instruction that are sent by the plurality of electronic devices, a feature map of the acoustic source features of the third speech instruction that respectively correspond to the plurality of electronic devices and the acoustic intensity features of the third speech instruction that respectively correspond to the plurality of electronic devices. The host device may generate the sound pickup rule based on the feature map obtained through drawing.

In an implementation of the first aspect, the host device determines a target acoustic source feature from the sound pickup rule, where the target acoustic source feature is the same as the acoustic source feature of the first speech instruction, and the target acoustic source feature corresponds to at least one first acoustic intensity feature. The host device determines a second acoustic intensity feature from the at least one first acoustic intensity feature, where the second acoustic intensity feature is a first acoustic intensity feature that meets a first preset condition. The host device determines a target electronic device among the plurality of electronic devices that has a correspondence with the target acoustic source feature and the second acoustic intensity feature as the sound pickup device.

In the foregoing sound pickup method, that the host device determines the second acoustic intensity feature from the at least one first acoustic intensity feature may include: The host device determines a first acoustic intensity feature with a largest acoustic intensity feature as the second acoustic intensity feature. The sound pickup device determined by the host device has better sound pickup effect than another electronic device.

In an implementation of the first aspect, the acoustic feature includes an acoustic intensity feature. The host device determines, based on a value of the acoustic intensity feature of the first speech instruction, a sound pickup device from the at least one first electronic device. The sound pickup device is a first electronic device that sends, to the host device, an acoustic intensity feature of the first speech instruction that meets a second preset condition.

In the foregoing sound pickup method, the host device may determine a first electronic device that collects a largest acoustic intensity feature as the sound pickup device. The sound pickup device determined by the host device has better sound pickup effect than another electronic device.

In an implementation of the first aspect, when the first speech instruction includes a task instruction, the task instruction includes a first audio clip and a second audio clip. The at least one first electronic device receives the first audio clip input by the user, and obtains an acoustic feature of the first audio clip. The host device obtains at least one acoustic feature that is collected by the at least one first electronic device and that corresponds to the first audio clip. The host device determines a second electronic device among the plurality of electronic devices as the sound pickup device based on the at least one acoustic feature corresponding to the first audio clip.

In the foregoing sound pickup method, the first audio clip and the second audio clip are a part of content of the first speech instruction. The host device may determine the sound pickup device from the plurality of electronic devices based on an acoustic feature corresponding to the part of content of the first speech instruction.

In an implementation of the first aspect, after the host device sends the sound pickup instruction to the sound pickup device, the second electronic device receives the second audio clip input by the user, and obtains an acoustic feature of the second audio clip. The host device obtains the acoustic feature of the second audio clip that is collected by the second electronic device. The host device determines the sound pickup device from the plurality of electronic devices based on the acoustic feature of the second audio clip.

In the foregoing sound pickup method, an audio clip most recently collected by the sound pickup device may be considered as the second audio clip, and an audio clip previously collected by the sound pickup device may be considered as the first audio clip. The second audio clip most recently collected by the sound pickup device may also serve as a first audio clip in a next process of collecting a second audio clip by the sound pickup device. After the host device determines the sound pickup device, the sound pickup device may obtain, based on a detected second audio clip, an acoustic feature of the second audio clip, and send the acoustic feature of the second audio clip to the host device. The host device may continuously re-determine a sound pickup device based on the received acoustic feature of the second audio clip.

In an implementation of the first aspect, after the host device determines the sound pickup device from the plurality of electronic devices based on the acoustic feature of the second audio clip, if the host device determines the second electronic device as the sound pickup device, the second electronic device further performs a sound pickup operation. If the host device determines a third electronic device among the plurality of electronic devices as the sound pickup device, the host device sends the sound pickup instruction to the third electronic device, and the host device sends a sound pickup stop instruction to the second electronic device. The third electronic device performs a sound pickup operation in response to the sound pickup instruction. The second electronic device performs a sound pickup stop operation in response to the sound pickup stop instruction.

In the foregoing sound pickup method, for a same speech instruction (for example, the second speech instruction), a plurality of sound pickup devices determined by the host device may sequentially perform a sound pickup operation. In this method, each of the plurality of electronic devices may detect a sound signal within a sound pickup range of the electronic device. However, only an electronic device determined as a sound pickup device can perform a sound pickup operation on a detected sound signal. Performing the sound pickup operation on the sound signal includes: sending the sound signal to the host device; and/or sending the sound signal to the server; and/or performing a speech-to-text conversion operation on the sound signal, and then sending obtained text to the server; or the like.

According to a second aspect, a sound pickup method is further provided, and is applied to a host device. In the method, the host device obtains at least one acoustic feature that is collected by at least one first electronic device among a plurality of electronic devices and that corresponds to a first speech instruction. The host device determines a sound pickup device from the plurality of electronic devices based on the at least one acoustic feature. The host device sends a sound pickup instruction to the sound pickup device, to instruct the sound pickup device to perform a sound pickup operation.

In the foregoing sound pickup method, if the first speech instruction includes wake-up speech, an electronic device that detects wake-up speech input by a user may be different from a subsequent electronic device that serves as a sound pickup device. If the first speech instruction includes a task instruction, an initial electronic device that detects a task instruction input by a user may be different from a subsequent electronic device that serves as a sound pickup device to further perform detection on the task instruction input by the user, and the host device can determine, from the plurality of electronic devices sequentially, an electronic device serving as a sound pickup device.

In an implementation of the second aspect, the host device obtains at least one acoustic feature that is collected by the at least one first electronic device during movement of the user and that corresponds to the first speech instruction. The host device determines the sound pickup device from the plurality of electronic devices sequentially based on the at least one acoustic feature.

In the foregoing sound pickup method, with movement of the user, the host device determines the sound pickup device from the plurality of electronic devices sequentially based on the at least one acoustic feature that is collected by the at least one first electronic device during movement of the user and that corresponds to the first speech instruction. During movement of the user, the sound pickup device determined by the host device has better sound pickup effect than another electronic device.

In an implementation of the second aspect, after determining the sound pickup device from the plurality of electronic devices based on the at least one acoustic feature, the host device sends a sound pickup stop instruction to a non-sound-pickup device among the plurality of electronic devices, to instruct the non-sound-pickup device to perform a sound pickup stop operation.

In the foregoing sound pickup method, the host device sends the sound pickup stop instruction to the non-sound-pickup device, and the non-sound-pickup device performs the sound pickup stop operation in response to the sound pickup stop instruction. This can prevent the non-sound-pickup device from being in a sound pickup state, and reduce power consumption of the non-sound-pickup device.

In an implementation of the second aspect, after obtaining the at least one acoustic feature that is collected by the at least one first electronic device among the plurality of electronic devices and that corresponds to the first speech instruction, the host device determines a reply device from the plurality of electronic devices, and the host device sends a reply instruction to the reply device, to instruct the reply device to perform a reply operation. Alternatively, after determining the sound pickup device from the plurality of electronic devices based on the at least one acoustic feature, the host device sends a reply instruction to the sound pickup device, to instruct the sound pickup device to perform a reply operation.

In the foregoing sound pickup method, the reply device determined by the host device may be the sound pickup device or any electronic device. For example, the reply device may be the first electronic device, or may not be the first electronic device. The reply device may be one or more preset electronic devices. Alternatively, after receiving acoustic features of the wake-up speech that are sent by a plurality of first electronic devices, the host device may determine a first electronic device corresponding to the 1^{st} received acoustic feature of the wake-up speech as the reply device. After determining the reply device, the host device sends a reply instruction to the reply device. After receiving the reply instruction sent by the host device, the reply device responds to a speech instruction (for example, the first speech instruction) input by the user, to improve user experience.

In an implementation of the second aspect, the acoustic feature includes at least one of an acoustic intensity feature and an acoustic source feature.

In the foregoing sound pickup method, the acoustic intensity feature represents sound intensity of a sound signal. Higher sound intensity of a sound signal detected by the first electronic device indicates a shorter distance between the sound signal and the corresponding first electronic device. The acoustic source feature represents a source of a sound signal (namely, an input direction of the sound signal). The sound pickup device determined by the host device from the plurality of electronic devices based on the at least one acoustic feature that is collected by the at least one first electronic device and that corresponds to the first speech instruction has better sound pickup effect than another electronic device.

In an implementation of the second aspect, the host device determines the sound pickup device based on an acoustic intensity feature of the first speech instruction, an acoustic source feature of the first speech instruction, and a sound pickup rule.

In the foregoing sound pickup method, the sound pickup rule may be prestored on the host device, or the sound pickup rule may be generated by the host device after the host device is trained by using training data that includes an acoustic feature of wake-up speech. The sound pickup device determined by the host device based on the acoustic intensity feature of the first speech instruction, the acoustic source feature of the first speech instruction, and the sound pickup rule has better sound pickup effect than another electronic device.

In an implementation of the second aspect, before obtaining the at least one acoustic feature that is collected by the at least one first electronic device among the plurality of electronic devices and that corresponds to the first speech instruction, the host device obtains a plurality of acoustic features that are collected by the plurality of electronic devices during movement of the user and that correspond to a third speech instruction. The host device determines the sound pickup rule based on the plurality of acoustic features. The sound pickup rule includes a correspondence between a plurality of acoustic intensity features corresponding to the third speech instruction, a plurality of acoustic source features corresponding to the third speech instruction, and the plurality of electronic devices.

In the foregoing sound pickup method, the user may move back and forth in space including the plurality of electronic devices, and continuously input the third speech instruction to the plurality of electronic devices. The third speech instruction may include at least one of wake-up speech and a task instruction.

When the third speech instruction includes the wake-up speech, the plurality of electronic devices may be in an awake state, or may not be in an awake state. An electronic device may receive a third speech instruction input to the electronic device by a user within a sound pickup range of the electronic device. When the third speech instruction includes the task instruction, an electronic device in an awake state may receive a third speech instruction input to the electronic device by a user within a sound pickup range of the electronic device. The host device may draw, based on the acoustic features of the third speech instruction that are sent by the plurality of electronic devices, a feature map of the acoustic source features of the third speech instruction that respectively correspond to the plurality of electronic devices and the acoustic intensity features of the third speech instruction that respectively correspond to the plurality of electronic devices. The host device may generate the sound pickup rule based on the feature map obtained through drawing.

In an implementation of the second aspect, the host device determines a target acoustic source feature from the sound pickup rule, where the target acoustic source feature is the same as the acoustic source feature of the first speech instruction, and the target acoustic source feature corresponds to at least one first acoustic intensity feature. The host device determines a second acoustic intensity feature from the at least one first acoustic intensity feature, where the second acoustic intensity feature is a first acoustic intensity feature that meets a first preset condition. The host device determines a target electronic device among the plurality of electronic devices that has a correspondence with the target acoustic source feature and the second acoustic intensity feature as the sound pickup device.

In the foregoing sound pickup method, that the host device determines the second acoustic intensity feature from the at least one first acoustic intensity feature may include: The host device determines a first acoustic intensity feature with a largest acoustic intensity feature as the second acoustic intensity feature. The sound pickup device determined by the host device has better sound pickup effect than another electronic device.

In an implementation of the second aspect, the acoustic feature includes an acoustic intensity feature. The host device determines, based on a value of the acoustic intensity feature of the first speech instruction, a sound pickup device from the at least one first electronic device. The sound pickup device is a first electronic device that sends, to the host device, an acoustic intensity feature of the first speech instruction that meets a second preset condition.

In the foregoing sound pickup method, the host device may determine a first electronic device that collects a largest acoustic intensity feature as the sound pickup device. The sound pickup device determined by the host device has better sound pickup effect than another electronic device.

In an implementation of the second aspect, when the first speech instruction includes a task instruction, the task instruction includes a first audio clip and a second audio clip. The host device obtains at least one acoustic feature that is collected by the at least one first electronic device and that corresponds to the first audio clip. The host device determines a second electronic device among the plurality of electronic devices as the sound pickup device based on the at least one acoustic feature corresponding to the first audio clip.

In the foregoing sound pickup method, the first audio clip and the second audio clip are a part of content of the first speech instruction. The host device may determine the sound pickup device from the plurality of electronic devices based on an acoustic feature corresponding to the part of content of the first speech instruction.

In an implementation of the second aspect, after sending the sound pickup instruction to the sound pickup device, the host device obtains an acoustic feature of the second audio clip that is collected by the second electronic device. The host device determines the sound pickup device from the plurality of electronic devices based on the acoustic feature of the second audio clip.

In the foregoing sound pickup method, after the host device determines the sound pickup device, the sound pickup device may obtain, based on a detected second audio clip, an acoustic feature of the second audio clip, and send the acoustic feature of the second audio clip to the host device. The host device may continuously re-determine a sound pickup device based on the received acoustic feature of the second audio clip.

In an implementation of the second aspect, after determining the sound pickup device from the plurality of electronic devices based on the acoustic feature of the second audio clip, if determining a third electronic device among the plurality of electronic devices as the sound pickup device, the host device sends the sound pickup instruction to the third electronic device, to instruct the third electronic device to perform a sound pickup operation, and the host device sends a sound pickup stop instruction to the second electronic device, to instruct the second electronic device to perform a sound pickup stop operation.

In the foregoing sound pickup method, for a same speech instruction (for example, the second speech instruction), a plurality of sound pickup devices determined by the host device may sequentially perform a sound pickup operation.

According to a third aspect, a sound pickup method is further provided, and is applied to an electronic device. The electronic device includes a first electronic device. In the method, the first electronic device receives a first speech instruction input by a user, and obtains an acoustic feature of the first speech instruction. The first electronic device sends the acoustic feature of the first speech instruction to a host device.

In the foregoing sound pickup method, the first electronic device sends the acoustic feature of the first speech instruction to the host device. Correspondingly, after receiving the acoustic feature of the first speech instruction that is sent by the first electronic device, the host device may determine, based on the acoustic feature of the first speech instruction, a sound pickup device from a plurality of electronic devices including the first electronic device. The first electronic device may be the sound pickup device determined by the host device, or may not be the sound pickup device determined by the host device. To be specific, an initial electronic device that detects a speech instruction input by the user may be different from a subsequent electronic device that serves as a sound pickup device to further perform detection on the speech instruction input by the user.

In an implementation of the third aspect, during movement of the user, the first electronic device receives the first speech instruction input by the user, and obtains the acoustic feature of the first speech instruction.

In the foregoing sound pickup method, with movement of the user, at least one first electronic device receives the first speech instruction input by the user, and the obtained acoustic feature of the first speech instruction may alternatively change. A sound pickup device determined by the host device from the plurality of electronic devices sequentially based on at least one acoustic feature that is collected by the at least one first electronic device during movement of the user and that corresponds to the first speech instruction has better sound pickup effect than another electronic device.

In an implementation of the third aspect, after the first electronic device sends the acoustic feature of the first speech instruction to the host device, if receiving a sound pickup instruction sent by the host device, the first electronic device performs a sound pickup operation as a sound pickup device in response to the sound pickup instruction.

In the foregoing sound pickup method, after sending the acoustic feature of the first speech instruction to the host device, the first electronic device may further continue to perform the sound pickup operation as a sound pickup device.

In an implementation of the third aspect, after the first electronic device performs the sound pickup operation as a sound pickup device in response to the sound pickup instruction, if receiving a sound pickup stop instruction sent by the host device, the first electronic device performs a sound pickup stop operation in response to the sound pickup stop instruction.

In the foregoing sound pickup method, the first electronic device receives the sound pickup stop instruction sent by the host device, and performs the sound pickup stop operation. This can prevent the first electronic device from remaining in a sound pickup state, and reduce power consumption of the first electronic device.

In an implementation of the third aspect, the first speech instruction includes wake-up speech, and after performing the sound pickup operation as a sound pickup device in response to the sound pickup instruction, the first electronic device receives a second speech instruction input by the user, where the second speech instruction includes a task instruction. The first electronic device sends the task instruction to a server, to enable the server to determine an execution device according to the task instruction, and send an execution instruction to the execution device. If receiving the execution instruction sent by the server, the first electronic device executes the task instruction as an execution device in response to the execution instruction.

In the foregoing sound pickup method, the first electronic device may perform a speech-to-text conversion operation on the second speech instruction input by the user, and send obtained text to the server, and the server may parse semantics of the text obtained by the sound pickup device. Alternatively, the first electronic device may send, to the server, the second speech instruction input by the user, and the server may perform a speech-to-text conversion operation on the second speech instruction collected by the first electronic device, and parse semantics of obtained text.

The server determines the execution device based on the semantics of the text corresponding to the second speech instruction. Then the server sends the execution instruction to the execution device. If the first electronic device receives the execution instruction sent by the server, the first electronic device is the execution device, and the first electronic device executes the task instruction according to the received execution instruction, to respond to the second speech instruction input by the user, to improve user experience.

In an implementation of the third aspect, the first speech instruction includes a task instruction, and after the first electronic device receives the first speech instruction input by the user and obtains the acoustic feature of the first speech instruction, the first electronic device sends the task instruction to a server, to enable the server to determine an execution device according to the task instruction, and send an execution instruction to the execution device. If receiving the execution instruction sent by the server, the first electronic device executes the task instruction as an execution device in response to the execution instruction.

In the foregoing sound pickup method, the first electronic device may perform a speech-to-text conversion operation on the first speech instruction input by the user, and send obtained text to the server, and the server may parse semantics of the text obtained by the first electronic device. Alternatively, the first electronic device may send, to the server, the first speech instruction input by the user, and the server may perform a speech-to-text conversion operation on the first speech instruction collected by the first electronic device, and parse semantics of obtained text. The server determines the execution device based on the semantics of the text corresponding to the first speech instruction. Then the server sends the execution instruction to the execution device.

If the first electronic device receives the execution instruction sent by the server, the first electronic device is the execution device, and the first electronic device executes the task instruction according to the received execution instruction, to respond to the second speech instruction input by the user, to improve user experience.

In an implementation of the third aspect, after the first electronic device sends the acoustic feature of the first speech instruction to the host device, if receiving a reply instruction sent by the host device, the first electronic device performs a reply operation as a reply device in response to the reply instruction.

In the foregoing sound pickup method, if the first electronic device receives the reply instruction sent by the host device, the first electronic device serves as a reply device to respond to a speech instruction (for example, the first speech instruction) input by the user, to improve user experience.

In an implementation of the third aspect, the acoustic feature includes at least one of an acoustic intensity feature and an acoustic source feature.

In the foregoing sound pickup method, the acoustic intensity feature represents sound intensity of a sound signal. Higher sound intensity of a sound signal detected by the first electronic device indicates a shorter distance between the sound signal and the corresponding first electronic device. The acoustic source feature represents a source of a sound signal (namely, an input direction of the sound signal). The sound pickup device determined by the host device from the plurality of electronic devices based on the at least one acoustic feature that is collected by the at least one first electronic device and that corresponds to the first speech instruction has better sound pickup effect than another electronic device.

In an implementation of the third aspect, when the first speech instruction includes a task instruction, the task instruction includes a first audio clip and a second audio clip. The first electronic device receives the first audio clip input by the user, and obtains an acoustic feature of the first audio clip. The first electronic device sends the acoustic feature of the first audio clip to the host device.

In the foregoing sound pickup method, the first audio clip and the second audio clip are a part of content of the first speech instruction. The host device may determine the sound pickup device from the plurality of electronic devices based on an acoustic feature that is collected by the first electronic device and that corresponds to the part of content of the first speech instruction.

In an implementation of the third aspect, before receiving a sound pickup stop instruction sent by the host device, the first electronic device receives, as a sound pickup device, the second audio clip input by the user, and obtains an acoustic feature of the second audio clip. The first electronic device sends the acoustic feature of the second audio clip to the host device.

In the foregoing sound pickup method, an audio clip most recently collected by the first electronic device may be considered as the second audio clip, and an audio clip previously collected by the first electronic device may be considered as the first audio clip. The second audio clip most recently collected by the first electronic device may also serve as a first audio clip in a next process of collecting a second audio clip by the first electronic device. The first electronic device may obtain, based on a detected second audio clip, an acoustic feature of the second audio clip, and send the acoustic feature of the second audio clip to the host device. The host device may continuously re-determine a sound pickup device based on the acoustic feature of the second audio clip that is collected by the first electronic device.

According to a fourth aspect, a communication system is provided. The communication system includes a host device, a server, and a plurality of electronic devices with a speech interaction function. All of the electronic devices in the communication system may enter an awake state in response to same wake-up speech input by a user. The electronic device in the communication system may perform all of the steps that can be performed by the electronic device in the first aspect. The host device in the communication system may perform all of the steps that can be performed by the host device in the first aspect. The server in the communication system may perform all of the steps that can be performed by the server in the first aspect.

According to a fifth aspect, a communication system is further provided. The communication system includes a server and a plurality of electronic devices with a speech interaction function. All of the electronic devices in the communication system may enter an awake state in response to same wake-up speech input by a user. The electronic device in the communication system may perform all of the steps that can be performed by the electronic device in the first aspect. The server in the communication system may perform all of the steps that can be performed by the server and the host device in the first aspect.

According to a sixth aspect, a communication system is further provided. The communication system includes a host device and a plurality of electronic devices with a speech interaction function. All of the electronic devices in the communication system may enter an awake state in response to same wake-up speech input by a user. The electronic device in the communication system may perform all of the steps that can be performed by the electronic device in the first aspect. The host device in the communication system may perform all of the steps that can be performed by the host device and the server in the first aspect.

According to a seventh aspect, a communication system is further provided. The communication system includes at least two electronic devices with a speech interaction function. All of the electronic devices in the communication system may enter an awake state in response to same wake-up speech input by a user. The electronic device in the communication system includes a primary device and a secondary device. The primary device and the secondary device in the communication system may perform all of the steps that can be performed by the electronic device in the first aspect. The primary device in the communication system may further perform all of the steps that can be performed by the host device and/or the server in the first aspect.

According to an eighth aspect, this application provides an electronic device, including a memory and one or more processors. The memory is coupled to the processor. The memory stores computer program code. The computer program code includes computer instructions. When the computer instructions are executed by the processor, the electronic device is enabled to perform the foregoing sound pickup method.

According to a ninth aspect, this application provides a computer-readable storage medium, including computer instructions. When the computer instructions are run on an electronic device, the electronic device is enabled to perform the foregoing sound pickup method.

According to a tenth aspect, this application provides a computer program product. When the computer program product runs on a computer, the computer is enabled to perform the foregoing sound pickup method.

### BRIEF DESCRIPTION OF DRAWINGS

FIG. 1 is a diagram of a scenario of a communication system according to an embodiment of this application;
FIG. 2 is a diagram of a structure of a communication system according to an embodiment of this application;
FIG. 3 is a diagram of a structure of another communication system according to an embodiment of this application;
FIG. 4 is a diagram of a structure of still another communication system according to an embodiment of this application;
FIG. 5 is a diagram of a hardware structure of an electronic device according to an embodiment of this application;
FIG. 6 is a schematic flowchart of a sound pickup method according to an embodiment of this application;
FIG. 7 is a first diagram of a sound pickup scenario according to an embodiment of this application;
FIG. 8 is a feature map corresponding to an acoustic source feature and an acoustic intensity feature according to an embodiment of this application;
FIG. 9 is a second diagram of a sound pickup scenario according to an embodiment of this application;
FIG. 10 is a third diagram of a sound pickup scenario according to an embodiment of this application;
FIG. 11 is a diagram of sound pickup ranges of a speaker, a camera, and a television according to an embodiment of this application;
FIG. 12 is a fourth diagram of a sound pickup scenario according to an embodiment of this application;
FIG. 13 is a diagram of sound pickup ranges of a television and a central control device according to an embodiment of this application;
FIG. 14 is a fifth diagram of a sound pickup scenario according to an embodiment of this application;
FIG. 15 is a sixth diagram of a sound pickup scenario according to an embodiment of this application; and
FIG. 16 is a diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of this application, "/" indicates an "or" relationship between associated objects, unless otherwise specified. For example, A/B may indicate A or B. In this application, "and/or" describes only an association relationship between associated objects, and indicates that three relationships may exist. For example, A and/or B may indicate the following three cases: Only A exists, both A and B exist, and only B exists, where A and B may be in a singular form or a plural form. In addition, in the descriptions of this application, "a plurality of" means two or more, unless otherwise specified. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c, where a, b, and c may be in a singular form or a plural form.

In addition, to clearly describe the technical solutions in embodiments of this application, the terms "first", "second", and the like are used in embodiments of this application to distinguish between identical items or similar items that have basically same functions or purposes. A person skilled in the art can understand that the terms "first", "second", and the like do not limit a quantity or an execution sequence, and the terms "first", "second", and the like do not indicate a definite difference. In addition, in embodiments of this application, the term "in an example", "for example", or the like is used to give an example, an illustration, or a description. Any embodiment or design scheme described with "in an example" or "for example" in embodiments of this application should not be construed as being more preferred or advantageous than another embodiment or design scheme. To be precise, the term "in an example", "for example", or the like is intended to present a related concept in a specific manner for ease of understanding.

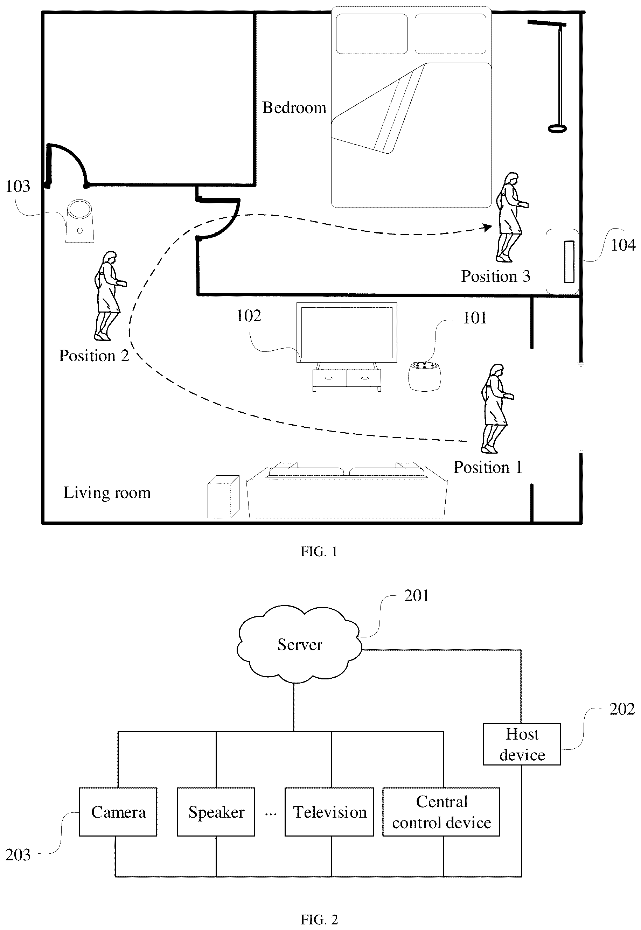

FIG. 1 is a diagram of a scenario of a communication system. The communication system includes a plurality of electronic devices with a speech interaction function, for example, a speaker 101, a television 102, and a camera 103 that are located in a living room, and a smart central control device 104 located in a bedroom. A user may input wake-up speech (for example, "Hi Celia") to an electronic device. After detecting the wake-up speech input by the user, the electronic device may enter an awake state. The electronic device in the awake state may further detect a task instruction (for example, "Broadcast today's weather") input by the user, and perform a corresponding task according to the detected task instruction, to perform speech interaction with the user.

During speech interaction with the user, the electronic device can detect only a sound signal within a sound pickup range of the electronic device. For example, still refer to FIG. 1. A position 1 falls within a sound pickup range of the speaker 101, and a position 2 falls within a sound pickup range of the camera 103. Both wake-up speech for waking up the speaker 101 and wake-up speech for waking up the camera 103 may be "Hi Celia". When the user utters the wake-up speech "Hi Celia" at the position 1, the speaker 101 may detect the wake-up speech "Hi Celia" input by the user, and enter an awake state.

After the speaker 101 enters the awake state, if the user moves to the position 2 and utters the task instruction "Broadcast today's weather" at the position 2, because the position 2 is beyond the sound pickup range of the speaker 101, the speaker 101 cannot detect the task instruction input by the user. In addition, although the position 2 falls within the sound pickup range of the camera 103, because the camera 103 has not detected wake-up speech input by the user, the camera 103 has not entered an awake state, and therefore the camera 103 cannot detect a task instruction input by the user or perform speech interaction with the user.

It can be learned that, after waking up an electronic device, the user can input a task instruction to the electronic device only within a sound pickup range of the electronic device, and cannot input a task instruction to another electronic device that is not woken up. That is, an electronic device for picking up wake-up speech input by the user and an electronic device for picking up a task instruction input by the user are a same electronic device.

Based on the foregoing content, embodiments of this application provide a sound pickup method, to determine a sound pickup device from a plurality of electronic devices based on an acoustic feature, received by a first electronic device among the plurality of electronic devices, of a first speech instruction. In this method, the plurality of electronic devices may alternately (or sequentially) serve as a sound pickup device to pick up sound.

In some embodiments, the sound pickup method provided in this application may be applied to a communication system shown in FIG. 2. The communication system includes a server (which may also be referred to as a cloud server) 201, a host device 202, and a plurality of electronic devices 203 with a speech interaction function (for example, cameras with a speech interaction function).

The host device may be one of the plurality of electronic devices. For example, the host device may be a camera 203 with a speech interaction function in FIG. 2. Alternatively, the host device may be an independent electronic device without a speech interaction function. This is not limited in this application.

Communication connections are established between the host device, the plurality of electronic devices, and the server. Communication connections established between the host device and the plurality of electronic devices may be wired communication connections or wireless communication connections. A communication connection established between the host device and the server may be a wireless communication connection. Communication connections established between the plurality of electronic devices and the server may be wireless communication connections. A wireless communication technology for establishing a wireless communication connection includes but is not limited to at least one of the following: a wireless local area network (wireless local area network, WLAN) (for example, a wireless fidelity (wireless fidelity, Wi-Fi) network), Bluetooth (Bluetooth, BT) (for example, conventional Bluetooth or Bluetooth low energy (Bluetooth low energy, BLE)), near field communication (near field communication, NFC), ZigBee (ZigBee), frequency modulation (frequency modulation, FM), infrared (infrared, IR), and the like.

The host device may manage the plurality of electronic devices. For example, after detecting a first speech instruction input by a user, a first electronic device among the plurality of electronic devices may obtain an acoustic feature of the first speech instruction. The host device may obtain acoustic features of the first speech instruction that are collected by a plurality of first electronic devices, and determine a sound pickup device from the plurality of electronic devices. The host device may send a sound pickup instruction to the sound pickup device, to instruct the sound pickup device to start sound pickup.

In some embodiments, after starting sound pickup, if detecting the first speech instruction input by the user, the sound pickup device among the plurality of electronic devices may send, to the server, the first speech instruction input by the user. The server may recognize semantics of the first speech instruction sent by the sound pickup device, and determine, from the plurality of electronic devices, an execution device for executing the first speech instruction, to indicate the execution device to execute the first speech instruction.

In some embodiments, after starting sound pickup, if detecting the first speech instruction input by the user, the sound pickup device among the plurality of electronic devices may send the first speech instruction to the host device. Then the host device sends the first speech instruction to the server. After recognizing semantics of the first speech instruction sent by the host device, the server determines, from the plurality of electronic devices, an execution device for executing the first speech instruction, and indicates the host device to manage execution, by the execution device, of the first speech instruction.

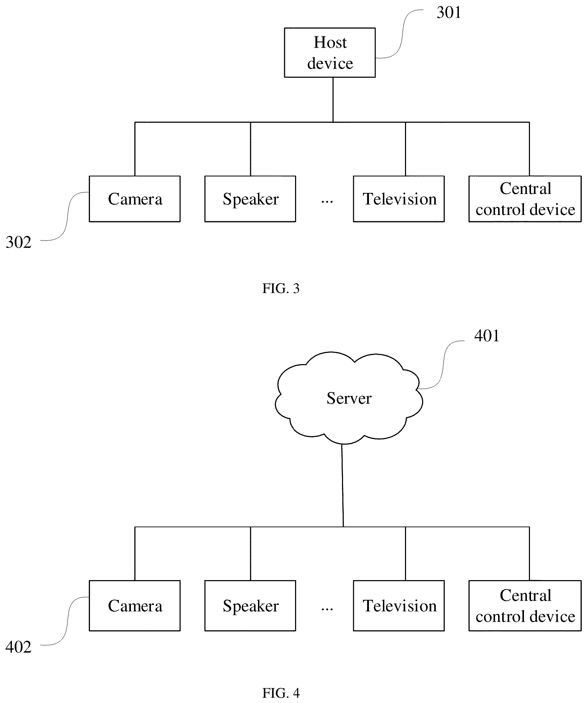

In some embodiments, the sound pickup method provided in this application may be applied to a communication system shown in FIG. 3. The communication system includes a host device 301 and a plurality of electronic devices 302 with a speech interaction function (for example, cameras with a speech interaction function).

Communication connections are established between the host device and the plurality of electronic devices, and the host device may manage the plurality of electronic devices. For descriptions of managing the plurality of electronic devices by the host device, refer to the descriptions in the foregoing embodiment. Details are not described herein again.

In some embodiments, the host device may further have the functions of the server in the foregoing embodiment. Details are not described herein again.

In some embodiments, the host device may be one of the plurality of electronic devices. For example, the host device may be a camera 302 with a speech interaction function in FIG. 3. Alternatively, the host device may be an independent electronic device without a speech interaction function. This is not limited in this application.

In some embodiments, for the communication connections established between the host device and the plurality of electronic devices, refer to the descriptions in the foregoing embodiment. Details are not described herein again.

In some embodiments, the sound pickup method provided in this application may be applied to a communication system shown in FIG. 4. The communication system includes a server 401 and a plurality of electronic devices 402 with a speech interaction function (for example, cameras with a speech interaction function).

Communication connections are established between the server and the plurality of electronic devices, and the server may manage the plurality of electronic devices. For example, after detecting a first speech instruction input by a user, a first electronic device among the plurality of electronic devices may obtain an acoustic feature of the first speech instruction, and send the acoustic feature of the first speech instruction to the server. After receiving acoustic features of the first speech instruction that are sent by a plurality of first electronic devices, the server may determine a sound pickup device from the plurality of electronic devices. The server may send a sound pickup instruction to the sound pickup device, to instruct the sound pickup device to start sound pickup.

In some embodiments, the server may recognize semantics of the first speech instruction that are sent by the plurality of electronic devices, and determine, from the plurality of electronic devices, an execution device for executing the first speech instruction, to indicate the execution device to execute the first speech instruction.

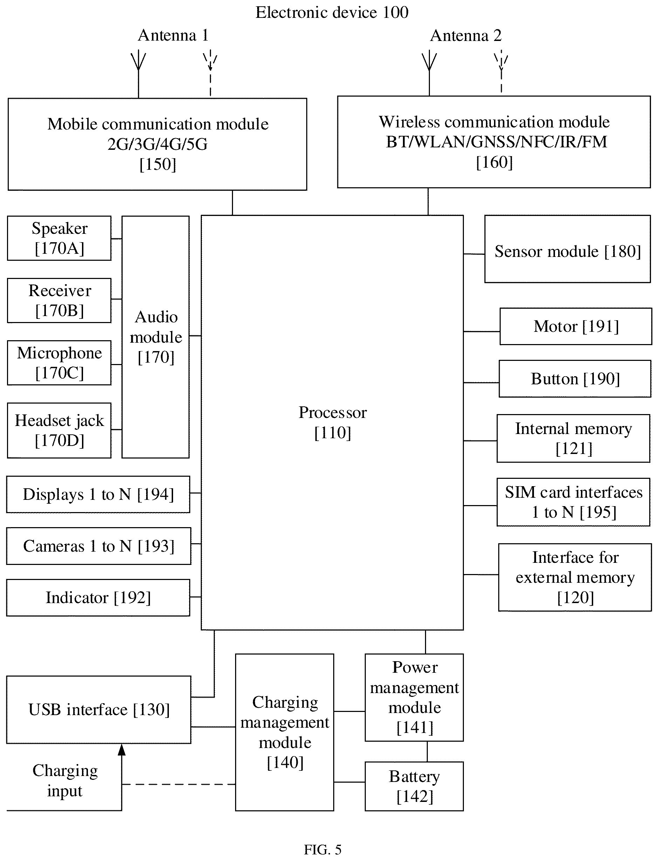

The electronic device in embodiments of this application may be an electronic device shown in FIG. 5. The electronic device shown in FIG. 5 may be a smart home device, a mobile phone, a tablet computer, a notebook computer, a netbook, a personal digital assistant (personal digital assistant, PDA), a wearable device, an artificial intelligence (artificial intelligence, AI) device, or another electronic device. The smart home device includes, for example, a smart television (television for short), a smart speaker (speaker for short), a smart camera (camera for short), a smart central control device (central control device for short), a smart screen, or the like. A specific form of the electronic device is not particularly limited in embodiments of this application.

Refer to FIG. 5. An electronic device 100 with a speech interaction function in embodiments of this application may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It can be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a timing signal, to control instruction fetching and instruction execution.

A memory may be further disposed in the processor 110 to store instructions and data. In some embodiments, the memory in the processor 110 is a cache. The memory may store instructions or data that have/has been used or are/is cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution applied to the electronic device 100 for wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the electronic device 100 for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, SCDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

For example, the electronic device 100 may establish a communication connection to another electronic device (for example, a host in embodiments of this application) based on the antenna 1, the antenna 2, the mobile communication module 150, the wireless communication module 160, the modem processor, the baseband processor, and the like. Alternatively, the electronic device 100 may establish a communication connection to a server in embodiments of this application based on the antenna 1, the antenna 2, the mobile communication module 150, the wireless communication module 160, the modem processor, and the baseband processor.

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and color temperature of an image shooting scene. In some embodiments, the ISP may be disposed in the camera 193.

The camera 193 is configured to collect a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may further process other digital signals in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that quickly processes input information with reference to a structure of a biological neural network, for example, a mode of transfer between human brain neurons, and may further continuously perform self-learning. Intelligent cognition applications, such as image recognition, facial recognition, speech recognition, and text understanding, of the electronic device 100 may be implemented through the NPU.

The interface for external memory 120 may be used for connecting an external memory card, for example, a microSD card, to extend a storage capability of the electronic device 100. The external memory card communicates with the processor 110 through the interface for external memory 120, to implement a data storage function. For example, files such as music and videos are stored in the external memory card.

The internal memory 121 may be configured to store computer-executable program code, and the executable program code includes instructions. The processor 110 runs the instructions stored in the internal memory 121 to implement various function applications and data processing of the electronic device 100. The internal memory 121 may include a program storage area and a data storage area. The program storage area may store an operating system, an application for at least one function (for example, a sound play function or an image play function), and the like. The data storage area may store data (for example, audio data and an address book) created during use of the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

In some embodiments, an external memory or the internal memory may store a sound pickup rule. The sound pickup rule includes a correspondence between an acoustic intensity feature, an acoustic source feature, and a plurality of electronic devices.

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode through the speaker 170A.

The microphone 170C, also referred to as a "mike" or a "mic", is configured to convert a sound signal into an electrical signal. When making a call or sending a voice message, a user may move the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and recognize a source of sound (for example, recognize an acoustic source feature of wake-up speech and/or a task instruction that are/is input by a user), to implement a directional recording function and the like.

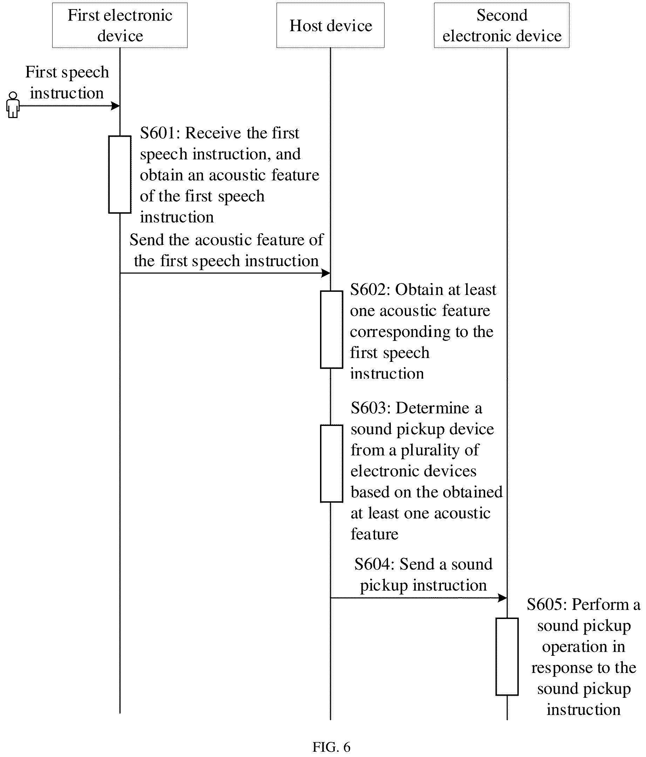

The sound pickup method provided in embodiments of this application may be applied to the communication systems shown in FIG. 2 to FIG. 4 in the foregoing embodiments. The following describes in detail the sound pickup method provided in embodiments of this application by using an example in which the method is applied to the communication system shown in FIG. 4. With reference to FIG. 6, the method includes the following steps.

S601: After receiving a first speech instruction input by a user, at least one first electronic device among a plurality of electronic devices obtains an acoustic feature of the first speech instruction. S602: A host device obtains at least one acoustic feature that is collected by the at least one first electronic device and that corresponds to the first speech instruction. S603: The host device determines a sound pickup device from the plurality of electronic devices based on the obtained at least one acoustic feature. S604: The host device sends a sound pickup instruction to the sound pickup device. Correspondingly, the sound pickup device receives the sound pickup instruction sent by the host device. S605: The sound pickup device performs a sound pickup operation (this may also be described as starting sound pickup or performing a speech-to-text conversion operation in this embodiment of this application) in response to the sound pickup instruction.

The acoustic feature is a physical quantity for representing an acoustic characteristic of speech, and is also a general term for acoustic representations of various elements of sound. In this embodiment of this application, the acoustic feature may include at least one of an acoustic intensity feature and an acoustic source feature. For descriptions of the acoustic intensity feature and the acoustic source feature, refer to the following detailed descriptions.

In some embodiments, the first speech instruction includes wake-up speech or a task instruction.

For example, the first speech instruction includes wake-up speech. Refer to FIG. 1. The user utters wake-up speech "Hi Celia" within a sound pickup range of a speaker 101. After detecting the wake-up speech "Hi Celia" input by the user, the speaker 101 obtains an acoustic feature of the wake-up speech. The speaker 101 sends the acoustic feature of the wake-up speech to the host device. After receiving the acoustic feature of the wake-up speech that is sent by the speaker 101, the host device may determine a sound pickup device from the plurality of electronic devices based on the acoustic feature of the wake-up speech.

For example, the host device may determine the speaker 101 as the sound pickup device based on the acoustic feature of the wake-up speech, or the host device may determine a television 102 as the sound pickup device based on the acoustic feature of the wake-up speech, or the host device may determine a camera 103 as the sound pickup device based on the acoustic feature of the wake-up speech.

In the foregoing example, although an electronic device that detects the wake-up speech of the user is the speaker 101, a subsequent electronic device that serves as a sound pickup device may still be the speaker 101, or may be another electronic device that does not detect the wake-up speech input by the user, for example, the camera 103 or the television 102. To be specific, the electronic device that detects the wake-up speech input by the user may be different from the subsequent electronic device that serves as a sound pickup device.

For example, the first speech instruction includes a task instruction. Still refer to FIG. 1. If the speaker 101 is in an awake state, when the user inputs, within the sound pickup range of the speaker 101, a task instruction "Turn on the light in the bedroom" to the speaker 101, the speaker 101 may obtain an acoustic feature of the task instruction "Turn on the light in the bedroom". After the speaker 101 sends the obtained acoustic feature of the task instruction to the host device, the host device may re-determine a sound pickup device from the plurality of electronic devices based on the acoustic feature of the task instruction that is sent by the speaker 101.

For example, the host device may determine the speaker 101 as the sound pickup device based on the acoustic feature of the task instruction, the host device may determine the television 102 as the sound pickup device based on the acoustic feature of the task instruction, or the host device may determine the camera 103 as the sound pickup device based on the acoustic feature of the task instruction.

In the foregoing example, although an initial electronic device that serves as a sound pickup device is the speaker 101, a subsequent electronic device that serves as a sound pickup device may still be the speaker 101, or may be another electronic device, for example, the camera 103 or the television 102. To be specific, an electronic device serving as a sound pickup device may change among the plurality of electronic devices sequentially.

In some embodiments, after determining the sound pickup device from the plurality of electronic devices, the host device may send the sound pickup instruction to the sound pickup device. The sound pickup device starts sound pickup in response to the sound pickup instruction. For example, in response to the received sound pickup instruction, the sound pickup device may receive a second speech instruction input by the user. The sound pickup device may obtain an acoustic feature of the second speech instruction, and send the acoustic feature of the second speech instruction to the host device. The host device may re-determine a sound pickup device based on the acoustic feature of the second speech instruction.

In some embodiments, when the first speech instruction includes a task instruction, the first speech instruction may include a plurality of audio clips. For example, when the first speech instruction is "Turn on the light in the bedroom", the first speech instruction may include an audio clip "Turn", an audio clip "on", an audio clip "the light", an audio clip "in", an audio clip "the bedroom", and the like. Still refer to FIG. 1. If the speaker 101 is in the awake state and detects the audio clip "Turn" input by the user, the speaker 101 may obtain an acoustic feature of the audio clip "Turn", and send the acoustic feature of the audio clip "Turn" to the host device. After receiving the acoustic feature of the audio clip "Turn", the host device may determine a sound pickup device based on the acoustic feature of the audio clip "Turn".

If the sound pickup device determined by the host device is still the speaker 101, the speaker 101 may continue to obtain an acoustic feature of the audio clip "on" after detecting the audio clip "on". After the speaker 101 sends the acoustic feature of the audio clip "on" to the host device, the host device may re-determine a sound pickup device based on the acoustic feature of the audio clip "on".

If the sound pickup device determined by the host device is the camera 103, the host device sends a sound pickup instruction to the camera 103, and sends a sound pickup stop instruction to the speaker 101. Correspondingly, after receiving the sound pickup instruction, the camera 103 serves as a sound pickup device to start sound pickup. After the speaker 101 receives the sound pickup stop instruction, the speaker 101 stops sound pickup (this may also be described as performing a sound pickup stop operation in this embodiment of this application).

In each of the foregoing processes of determining a sound pickup device, a device that detects speech of the user before a sound pickup device is determined may be considered as a first electronic device, and a sound pickup device determined at a previous time may also serve as a first electronic device in a next determining process.

In the foregoing example, after the host device determines the sound pickup device, the sound pickup device may obtain, based on a detected audio clip of the first speech instruction, an acoustic feature of the audio clip, and send the acoustic feature of the audio clip to the host device. The host device may continuously re-determine a sound pickup device based on the received acoustic feature of the audio clip. The sound pickup device re-determined by the host device has better sound pickup effect than another electronic device.

The following describes in detail the sound pickup method provided in embodiments of this application with reference to the accompanying drawings.

In some embodiments, after receiving wake-up speech input by the user, at least one first electronic device among the plurality of electronic devices may obtain an acoustic feature of the wake-up speech.

The plurality of electronic devices are equipped with microphones, and/or the plurality of electronic devices may be connected to a microphone. The microphones of the plurality of electronic devices may be preset to an always on (always on) state. In this way, the plurality of electronic devices can collect a sound signal in a surrounding environment at a specific frequency through the microphones. The user inputs the wake-up speech through a continuous process. Therefore, when collecting a sound signal at the beginning, the plurality of electronic devices cannot determine whether the sound signal is preset wake-up speech. When at least one first electronic device among the plurality of electronic devices detects that the sound signal stops, the first electronic device may obtain a segment of sound signal that falls within a time period from a moment at which the sound signal starts to be detected to a moment at which the sound signal stops.

In some embodiments, the first electronic device may determine, through recognition by using a keyword detection algorithm, whether the segment of sound signal includes a preset wake-up word, for example, "Hi Celia". That the segment of sound signal includes the preset wake-up word indicates that the segment of sound signal collected by the first electronic device is wake-up speech input by the user, and the first electronic device may enter an awake state and obtain an acoustic feature of the wake-up speech. That the segment of sound signal does not include the preset wake-up word indicates that the segment of sound signal collected by the first electronic device is not wake-up speech input by the user, and the first electronic device does not enter an awake state, and does not need to obtain an acoustic feature of the wake-up speech.

In some embodiments, the first electronic device may determine, through recognition in real time, whether a collected sound signal includes the preset wake-up word. After recognizing the preset wake-up word, regardless of whether a sound signal being collected by the first electronic device stops, the first electronic device may enter the awake state and obtain an acoustic feature of the wake-up speech.

To be specific, each time the first electronic device collects a segment of sound signal, the first electronic device may obtain an acoustic feature of the segment of sound signal. If subsequently recognizing that the segment of sound signal is wake-up speech, the first electronic device determines the acoustic feature of the segment of sound signal as an acoustic feature of the wake-up speech. For at least one first electronic device that receives the wake-up speech, each first electronic device may determine an acoustic feature of the wake-up speech.

In some embodiments, the acoustic feature of the wake-up speech includes an acoustic intensity feature of the wake-up speech.

The acoustic intensity feature of the wake-up speech represents sound intensity of the wake-up speech. Higher sound intensity of the wake-up speech indicates a shorter distance between the user and a corresponding first electronic device at a moment at which the user inputs the wake-up speech.

In some embodiments, an electronic device may obtain an acoustic intensity feature of wake-up speech based on a speech intensity detection algorithm.

For example, if a sound signal collected by the first electronic device is wake-up speech input by the user, the first electronic device may calculate an acoustic intensity feature of the wake-up speech by using the speech intensity detection algorithm. For at least one first electronic device that receives the wake-up speech, each first electronic device may determine, based on the speech intensity detection algorithm, an acoustic intensity feature of the wake-up speech.

In some embodiments, because the wake-up speech is a segment of sound signal, the wake-up speech may correspond to a plurality of acoustic intensity features. For example, the user moves in a direction away from the speaker, and inputs the wake-up speech "Hi Celia (ni hao xiao yi)" to the speaker while moving. An acoustic intensity feature at a moment at which the user utters "Hi Celia" may remain unchanged. However, because the user is increasingly far away from the speaker, an acoustic intensity feature corresponding to the wake-up speech "Hi Celia" detected by the speaker is not fixed. For example, an acoustic intensity feature corresponding to "ni" detected by the speaker is greater than an acoustic intensity feature corresponding to "hao" detected by the speaker, the acoustic intensity feature corresponding to "hao" detected by the speaker is greater than an acoustic intensity feature corresponding to "xiao" detected by the speaker, and the acoustic intensity feature corresponding to "xiao" detected by the speaker is greater than an acoustic intensity feature corresponding to "yi" detected by the speaker. That is, the wake-up speech "Hi Celia" detected by the speaker corresponds to a plurality of acoustic intensity features.

In some embodiments, the acoustic feature of the wake-up speech may further include an acoustic source feature of the wake-up speech.

The acoustic source feature of the wake-up speech represents a source of the wake-up speech (namely, an input direction of the wake-up speech).

For example, a plurality of microphones (for example, a microphone array) may be preset in the plurality of electronic devices. Based on the microphone array, the input direction of the wake-up speech may be recognized, to obtain the acoustic source feature of the wake-up speech.

Similar to the foregoing embodiment in which the wake-up speech corresponds to a plurality of acoustic intensity features, in some embodiments, the wake-up speech may correspond to a plurality of acoustic source features.

For example, the user moves from a due south direction of the speaker to a due north direction of the speaker, and inputs the wake-up speech "Hi Celia" to the speaker while moving. Because a direction of the user relative to the speaker is constantly changing, an acoustic source feature corresponding to the wake-up speech "Hi Celia" detected by the speaker is not fixed. For example, an acoustic source feature corresponding to "ni" detected by the speaker is the due south direction, an acoustic source feature corresponding to "hao" detected by the speaker is a direction at 30° north of south, an acoustic source feature corresponding to "xiao" detected by the speaker is a direction at 60° north of south, and an acoustic source feature corresponding to "yi" detected by the speaker is the due north direction. That is, the wake-up speech "ni hao xiao yi" detected by the speaker corresponds to a plurality of acoustic source features.

In some embodiments, after obtaining the acoustic feature of the wake-up speech, the first electronic device may send the obtained acoustic feature of the wake-up speech to the host device. Communication connections are established between the host device and the plurality of electronic devices. The host device may not be a device among the plurality of electronic devices. In other words, the host device may be a device independent of the plurality of electronic devices. The host device may alternatively be one of the plurality of electronic devices. For example, the host device may be any first electronic device.

When there are a plurality of first electronic devices and the host device is one of the plurality of first electronic devices, both the host device and a non-host device among the first electronic devices may obtain acoustic features of the wake-up speech. Because the host device does not need to send an acoustic feature of the wake-up speech to the host device itself, the host device only needs to receive an acoustic feature of the wake-up speech that is sent by the non-host device among the first electronic devices.

In some embodiments, when sending the acoustic feature of the wake-up speech to the host device, the first electronic device may further send a device identifier (for example, a device ID) to the host device. The host device may determine, based on the device identity, sources of a plurality of received acoustic features.

In some embodiments, after receiving an acoustic feature of the wake-up speech that is sent by at least one first electronic device, the host device may determine a sound pickup device from the plurality of electronic devices based on the acoustic feature of the wake-up speech.

When the acoustic feature of the wake-up speech includes an acoustic intensity feature of the wake-up speech, because the acoustic intensity feature of the wake-up speech represents sound intensity of the wake-up speech, a larger acoustic intensity feature of the wake-up speech received by the first electronic device indicates a shorter distance between the first electronic device and the user. Therefore, the host device may sort an acoustic intensity feature collected by the at least one first electronic device, and determine a first electronic device that meets a second preset condition as the sound pickup device. For example, the host device may determine a first electronic device that collects a largest acoustic intensity feature as the sound pickup device.

For example, still refer to FIG. 1. The user may input, at a position 1, the wake-up speech "Hi Celia" to the speaker 101 and the television 102. After detecting the wake-up speech input by the user, the speaker 101 and the television 102 may serve as first electronic devices to obtain acoustic features of the wake-up speech. The acoustic features include acoustic intensity features. Because the position 1 of the user is closer to the speaker 101 and is farther away from the television 102, an acoustic intensity feature of the wake-up speech detected by the speaker 101 is greater than an acoustic intensity feature of the wake-up speech detected by the television 102. After the speaker 101 and the television 102 send the acoustic intensity features of the wake-up speech to the host device, the host device may sort the acoustic intensity features of the wake-up speech that are sent by the speaker 101 and the television 102. Because an acoustic intensity feature of the wake-up speech that is sent by the speaker 101 is greater than an acoustic intensity feature of the wake-up speech that is sent by the television 102, the host device may determine the speaker 101 as a sound pickup device.

In some embodiments, when the acoustic feature of the wake-up speech includes an acoustic intensity feature of the wake-up speech, an acoustic feature sent by a same first electronic device to the host device may include at least two acoustic intensity features. The host device may calculate an average value of the at least two acoustic intensity features, and use the obtained average value as an acoustic intensity feature of the corresponding first electronic device. Then the host device may sort an acoustic intensity feature sent by the at least one first electronic device, and determine a first electronic device that meets a second preset condition as the sound pickup device. For example, the host device may determine a first electronic device that collects a largest acoustic intensity feature as the sound pickup device.

For example, still refer to FIG. 1. The user moves from the position 1 to a position 2, and inputs the wake-up speech "Hi Celia" to the speaker 101 and the television 102 while moving.

After the speaker 101 detects the wake-up speech input by the user, an obtained acoustic feature of the wake-up speech includes an acoustic intensity feature 40 dB corresponding to "ni", an acoustic intensity feature 45 dB corresponding to "hao", an acoustic intensity feature 40 dB corresponding to "xiao", and an acoustic intensity feature 30 dB corresponding to "yi".

After the television 102 detects the wake-up speech input by the user, an obtained acoustic feature of the wake-up speech includes an acoustic intensity feature 30 dB corresponding to "ni", an acoustic intensity feature 40 dB corresponding to "hao", an acoustic intensity feature 50 dB corresponding to "xiao", and an acoustic intensity feature 45 dB corresponding to "yi".

After the speaker 101 and the television 102 respectively send the obtained acoustic features of the wake-up speech to the host device, the host device may calculate, based on an acoustic feature of the wake-up speech that is sent by the speaker 101, an average value of the acoustic intensity feature 40 dB corresponding to "ni", the acoustic intensity feature 45 dB corresponding to "hao", the acoustic intensity feature 40 dB corresponding to "xiao", and the acoustic intensity feature 30 dB corresponding to "yi", to obtain an acoustic intensity feature 38.75 dB of the wake-up speech that is sent by the speaker 101.

The host device may calculate, based on an acoustic feature of the wake-up speech that is sent by the television 102, an average value of the acoustic intensity feature 30 dB corresponding to "ni", the acoustic intensity feature 40 dB corresponding to "hao", the acoustic intensity feature 50 dB corresponding to "xiao", and the acoustic intensity feature 45 dB corresponding to "yi", to obtain an acoustic intensity feature 41.25 dB of the wake-up speech that is sent by the television 102. The acoustic intensity feature of the wake-up speech that is sent by the television 102 is greater than the acoustic intensity feature of the wake-up speech that is sent by the speaker 101. Therefore, the host device may determine the television 102 as the sound pickup device.

In some embodiments, when the acoustic feature of the wake-up speech includes an acoustic intensity feature of the wake-up speech and an acoustic source feature of the wake-up speech, because the acoustic intensity feature of the wake-up speech represents sound intensity of the wake-up speech and the acoustic source feature of the wake-up speech represents an input direction of the wake-up speech, the host device may determine a sound pickup device from the plurality of electronic devices based on the acoustic intensity feature of the wake-up speech, the acoustic source feature of the wake-up speech, and a sound pickup rule.

In some embodiments, the sound pickup rule includes a correspondence between an acoustic intensity feature, an acoustic source feature, and a sound pickup device. The sound pickup rule may be prestored on the host device, or the sound pickup rule may be generated by the host device after the host device is trained by using training data that includes an acoustic feature of wake-up speech.

The following provides an example of a specific manner of generating the sound pickup rule.

In some embodiments, the user may move back and forth in space including the foregoing communication system, and continuously input a third speech instruction to the plurality of electronic devices.

In some embodiments, the third speech instruction includes wake-up speech. The plurality of electronic devices may be in an awake state, or may not be in an awake state. An electronic device may receive a third speech instruction input to the electronic device by a user within a sound pickup range of the electronic device.

In some embodiments, the third speech instruction includes a task instruction. An electronic device in an awake state may receive a third speech instruction input to the electronic device by a user within a sound pickup range of the electronic device.

In some embodiments, after detecting the third speech instruction input by the user, the plurality of electronic devices may obtain acoustic features of the third speech instruction, and send the acoustic features of the third speech instruction to the host device. The host device may draw, based on the acoustic features of the third speech instruction that are sent by the plurality of electronic devices, a feature map of acoustic source features of the third speech instruction that respectively correspond to the plurality of electronic devices and acoustic intensity features of the third speech instruction that respectively correspond to the plurality of electronic devices. The host device may generate the sound pickup rule based on the feature map obtained through drawing.

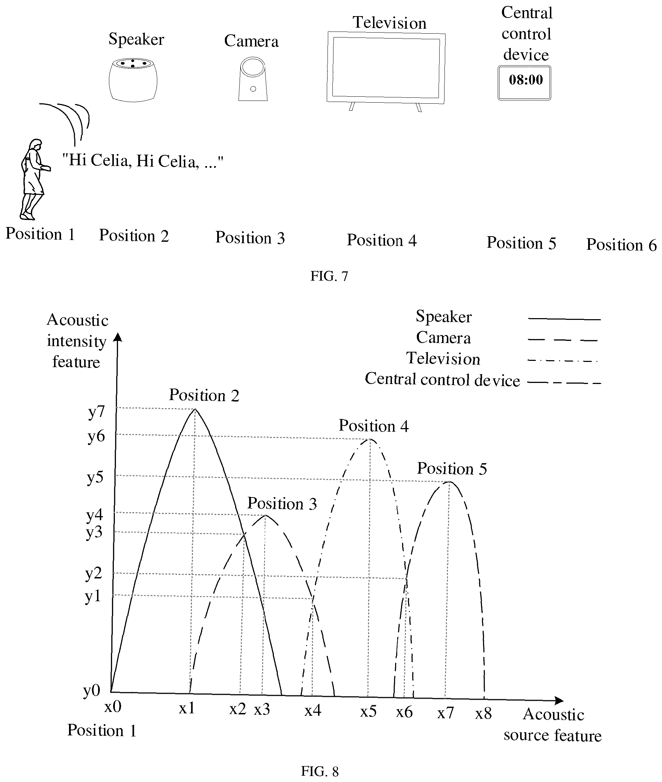

For example, the third speech instruction includes wake-up speech. Refer to FIG. 7. The user moves from a position 1 to a position 2, and continuously outputs wake-up speech "Hi Celia", "Hi Celia", "Hi Celia", "..." during movement. Before the user arrives at the position 2, only a speaker may detect the wake-up speech input by the user, and each time the speaker detects the wake-up speech input by the user, the speaker may obtain an acoustic feature of the wake-up speech, and send the acoustic feature of the wake-up speech to the host device.

For the speaker, when the user moves from the position 1 to the position 2, a distance between the user and the speaker is constantly changing (gradually decreasing). Therefore, an acoustic intensity feature corresponding to wake-up speech detected by the speaker each time varies. In addition, a direction of the user relative to the speaker is also constantly changing (gradually moving from a southwest direction to a due south direction). Therefore, an acoustic source feature corresponding to wake-up speech detected by the speaker each time also varies.

Based on the acoustic feature of the wake-up speech that is sent by the speaker, the host device may draw a feature map corresponding to an acoustic source feature and an acoustic intensity feature of the speaker, as shown in FIG. 8. For the feature map of the speaker, coordinates (x0, y0) correspond to the position 1. To be specific, when the user is at the position 1, an acoustic source feature of the wake-up speech that is sent by the speaker and that is received by the host device is x0, and an acoustic intensity feature is y0. Coordinates (x1, y7) correspond to the position 2. To be specific, when the user is at the position 2, an acoustic source feature of the wake-up speech that is sent by the speaker and that is received by the host device is x1, and an acoustic intensity feature is y7. It can be learned that, during movement of the user from the position 1 to the position 2, an acoustic source feature of wake-up speech detected by the speaker falls between x0 and x1 and continuously increases, and an acoustic intensity feature falls between y0 and y7 and continuously increases.

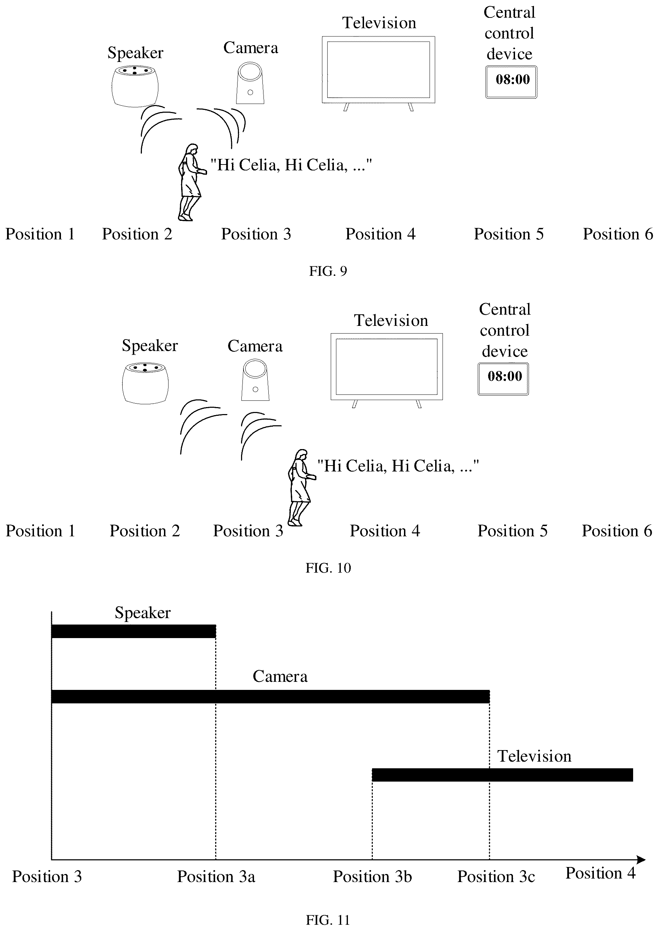

For example, refer to FIG. 9. The user arrives at the position 2 and continues to move toward a position 3, and during movement, still continuously outputs wake-up speech "Hi Celia", "Hi Celia", "Hi Celia", "...". When the user is located between the position 2 and the position 3, both the speaker and a camera may detect the wake-up speech input by the user, and each time the speaker and the camera detect the wake-up speech input by the user, the speaker and the camera may obtain acoustic features of the wake-up speech, and send the acoustic features of the wake-up speech to the host device.

With reference to the descriptions in the foregoing embodiments, during movement of the user from the position 2 to the position 3, for the speaker, an acoustic intensity feature corresponding to wake-up speech detected by the speaker each time varies, and an acoustic source feature also varies. Similarly, for the camera, an acoustic intensity feature corresponding to wake-up speech detected by the camera each time varies, and an acoustic source feature also varies. Based on the acoustic features of the wake-up speech that are sent by the speaker and the camera, the host device may draw a feature map corresponding to an acoustic source feature and an acoustic intensity feature of the speaker, and a feature map corresponding to an acoustic source feature and an acoustic intensity feature of the camera, as shown in FIG. 8.

For the feature map of the speaker, coordinates (x3, y1) correspond to the position 3. To be specific, when the user is at the position 3, an acoustic source feature of the wake-up speech that is sent by the speaker and that is received by the host device is x3, and an acoustic intensity feature is y1. In addition, when the user is at the position 2, an acoustic source feature of the wake-up speech that is sent by the speaker and that is received by the host device is x1, and an acoustic intensity feature is y7. It can be learned that, during movement of the user from the position 2 to the position 3, an acoustic source feature of wake-up speech detected by the speaker falls between x1 and x3 and continuously increases, and an acoustic intensity feature falls between y7 and y1 and continuously decreases.

Similarly, for the feature map of the camera, coordinates (x1, y0) correspond to the position 2. To be specific, when the user is at the position 2, an acoustic source feature of the wake-up speech that is sent by the camera and that is received by the host device is x1, and an acoustic intensity feature is y0. Coordinates (x3, y4) correspond to the position 3. To be specific, when the user is at the position 3, an acoustic source feature of the wake-up speech that is sent by the camera and that is received by the host device is x3, and an acoustic intensity feature is y4. It can be learned that, during movement of the user from the position 2 to the position 3, an acoustic source feature of wake-up speech detected by the camera falls between x1 and x3 and continuously increases, and an acoustic intensity feature falls between y0 and y4 and continuously increases.

For example, refer to FIG. 10. The user arrives at the position 3 and continues to move toward a position 4, and during movement, still continuously outputs wake-up speech "Hi Celia", "Hi Celia", "Hi Celia", "...". Refer to FIG. 11. Before the user arrives at a position 3a, the speaker and the camera may detect the wake-up speech input by the user. When the user is located between the position 3a and a position 3b, only the camera can detect the wake-up speech input by the user. When the user arrives at the position 3b and moves toward a position 3c, both the camera and a television may detect the wake-up speech input by the user. When the user arrives at the position 3c and moves toward a position 4, only the television can detect the wake-up speech input by the user. In addition, each time the speaker, the camera, and the television detect the wake-up speech input by the user, the speaker, the camera, and the television may obtain acoustic features of the wake-up speech, and send the acoustic features of the wake-up speech to the host device.

With reference to the descriptions in the foregoing embodiments, during movement of the user from the position 3 to the position 3a, for the speaker, an acoustic intensity feature corresponding to wake-up speech detected by the speaker each time varies, and an acoustic source feature also varies. After the user arrives at the position 3a, the user leaves a sound pickup range of the speaker, and the speaker can no longer detect the wake-up speech input by the user.

Similarly, for the camera, an acoustic intensity feature corresponding to wake-up speech detected by the camera each time varies, and an acoustic source feature also varies. During movement of the user from the position 3 to the position 3c, the camera may keep detecting the wake-up speech input by the user. After the user arrives at the position 3c, the user leaves a sound pickup range of the camera, and the camera can no longer detect the wake-up speech input by the user.

Similarly, for the television, an acoustic intensity feature corresponding to wake-up speech detected by the television each time varies, and an acoustic source feature also varies. During movement of the user from the position 3b to the position 4, the television may keep detecting the wake-up speech input by the user.

Based on the acoustic features of the wake-up speech that are sent by the speaker, the camera, and the television, the host device may draw a feature map corresponding to an acoustic source feature and an acoustic intensity feature of the speaker, a feature map corresponding to an acoustic source feature and an acoustic intensity feature of the camera, and a feature map corresponding to an acoustic source feature and an acoustic intensity feature of the television, as shown in FIG. 8.

For the feature map of the speaker, during movement of the user from the position 3 to the position 3a, an acoustic source feature of wake-up speech detected by the speaker continuously increases, and an acoustic intensity feature continuously decreases, until the acoustic source feature is y0 and the speaker cannot detect the wake-up speech input by the user.

Similarly, for the feature map of the camera, during movement of the user from the position 3 to the position 3c, an acoustic source feature of wake-up speech detected by the camera continuously increases, and an acoustic intensity feature continuously decreases, until the acoustic source feature is y0 and the camera cannot detect the wake-up speech input by the user.

Similarly, for the feature map of the television, coordinates (x5, y6) correspond to the position 4. To be specific, when the user is at the position 4, an acoustic source feature of the wake-up speech that is sent by the television and that is received by the host device is x5, and an acoustic intensity feature is y6. During movement of the user from the position 3b to the position 4, an acoustic source feature of wake-up speech detected by the television continuously increases, and an acoustic intensity feature continuously increases.

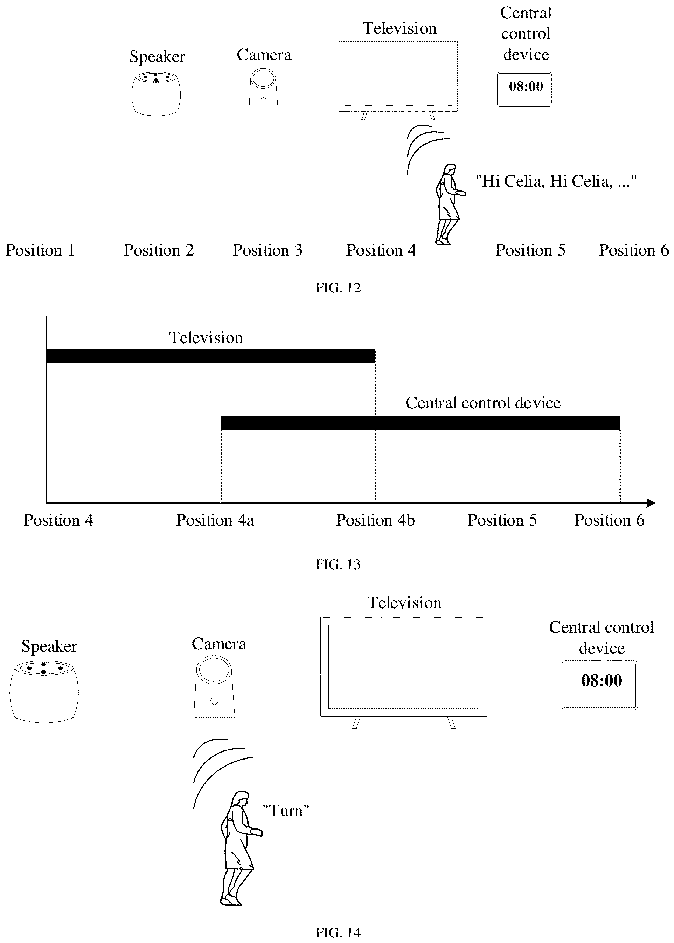

For example, refer to FIG. 12. The user arrives at the position 4 and continues to move toward a position 5, and during movement, still continuously outputs wake-up speech "Hi Celia", "Hi Celia", "Hi Celia", "...". Refer to FIG. 13. Before the user arrives at a position 4a, only the television can detect the wake-up speech input by the user. When the user is located between the position 4a and a position 4b, both the television and a central control device may detect the wake-up speech input by the user. When the user arrives at the position 4b and moves toward a position 5, only the central control device can detect the wake-up speech input by the user. In addition, each time the television and the central control device detect the wake-up speech input by the user, the television and the central control device may obtain acoustic features of the wake-up speech, and send the acoustic features of the wake-up speech to the host device.

With reference to the descriptions in the foregoing embodiments, for the television, during movement of the user from the position 4 to the position 5, an acoustic intensity feature corresponding to wake-up speech detected by the television each time varies, and an acoustic source feature also varies. After the user arrives at the position 4b, the user leaves a sound pickup range of the television, and the television can no longer detect the wake-up speech input by the user.

Similarly, for the central control device, an acoustic intensity feature corresponding to wake-up speech detected by the central control device each time varies, and an acoustic source feature also varies. During movement of the user from the position 4 to the position 5, when the user arrives at the position 4a, the user enters a sound pickup range of the central control device. During movement of the user from the position 4a to the position 5, the central control device may keep detecting the wake-up speech input by the user.

Based on the acoustic features of the wake-up speech that are sent by the television and the central control device, the host device may draw a feature map corresponding to an acoustic source feature and an acoustic intensity feature of the television, and a feature map corresponding to an acoustic source feature and an acoustic intensity feature of the central control device, as shown in FIG. 8.

For the feature map of the television, during movement of the user from the position 4 to the position 4b, an acoustic source feature of wake-up speech detected by the television continuously increases, and an acoustic intensity feature continuously decreases, until the acoustic source feature is y0 and the television cannot detect the wake-up speech input by the user.

Similarly, for the feature map of the central control device, coordinates (x7, y5) correspond to the position 5. To be specific, when the user is at the position 5, an acoustic source feature of the wake-up speech that is sent by the television and that is received by the host device is x7, and an acoustic intensity feature is y5. During movement of the user from the position 4a to the position 5, an acoustic source feature of wake-up speech detected by the central control device continuously increases, and an acoustic intensity feature continuously increases.

For example, the user arrives at the position 5 and continues to move toward a position 6, and during movement, still continuously outputs wake-up speech "Hi Celia", "Hi Celia", "Hi Celia", "...". Still refer to FIG. 13. When the user is located between the position 5 and the position 6, only the central control device can detect the wake-up speech input by the user. In addition, each time the central control device detects the wake-up speech input by the user, the central control device may obtain an acoustic feature of the wake-up speech, and send the acoustic feature of the wake-up speech to the host device.

With reference to the descriptions in the foregoing embodiments, for the central control device, an acoustic intensity feature corresponding to wake-up speech detected by the central control device each time varies, and an acoustic source feature also varies. Based on the acoustic feature of the wake-up speech that is sent by the central control device, the host device may draw a feature map corresponding to an acoustic source feature and an acoustic intensity feature of the central control device, as shown in FIG. 8.

For the feature map of the central control device, during movement of the user from the position 5 to the position 6, an acoustic source feature of wake-up speech detected by the central control device continuously increases, and an acoustic intensity feature continuously decreases, until the acoustic source feature is y0 and the central control device cannot detect the wake-up speech input by the user.

In some embodiments, the host device may generate the sound pickup rule based on the feature maps obtained in the foregoing embodiments. The sound pickup rule includes a correspondence between a plurality of acoustic intensity features corresponding to the third speech instruction, a plurality of acoustic source features corresponding to the third speech instruction, and the plurality of electronic devices. After the host device receives at least one acoustic feature that is collected by at least one first electronic device and that corresponds to the first speech instruction, the host device may obtain a target acoustic source feature from the sound pickup rule.

The target acoustic source feature is the same as the acoustic source feature of the first speech instruction, and the target acoustic source feature corresponds to at least one first acoustic intensity feature. The host device may determine a second acoustic intensity feature from the at least one first acoustic intensity feature, where the second acoustic intensity feature is a first acoustic intensity feature that meets a first preset condition. For example, the host device may determine a first acoustic intensity feature with a largest acoustic intensity feature as the second acoustic intensity feature. Then the host device may determine, from the plurality of electronic devices, a target electronic device that has a correspondence with the target acoustic source feature and the second acoustic intensity feature as the sound pickup device.

In some embodiments, the sound pickup rule may be shown in Table 1.

**Table 1**

| Moving direction of the user | Acoustic intensity feature (y) | Acoustic source feature (x) | Electronic device |
|---|---|---|---|
| Approaching the speaker | Speaker: y0 → y7 | Speaker: x0 → x1 | Speaker |
| Speaker → camera (away from the speaker) | Speaker: y7 → y3 | Speaker: x1 → x2 | Speaker |
| | Camera: y0 → y3 | Camera: x1 → x2 | |
| Speaker → camera (near the camera) | Camera: y3 → y4 | Camera: x2 → x3 | Camera |
| Camera → television (away from the camera) | Camera: y4 → y1 | Camera: x3 → x4 | Camera |
| | Television: y0 → y1 | Television: x3 → x4 | |
| Camera → television (near the television) | Camera: y1 → y0 | Camera: x4 → x5 | Television |
| | Television: y1 → y6 | Television: x4 → x5 | |
| Television → central control device (away from the television) | Television: y6 → y2 | Television: x5 → x6 | Television |
| | Central control device: y0 → y2 | Central control device: x5 → x6 | |
| Television → central control device (near the central control device) | Television: y2 → y0 | Television: x6 → x7 | Central control device |
| | Central control device: y2 → y5 | Central control device: x6 → x7 | |
| Moving away from the central control device | Central control device: y5 → y0 | Central control device: x7 → x8 | Central control device |

For example, the host detects that the acoustic intensity feature of the speaker falls between y0 and y7 and gradually increases and the acoustic source feature of the speaker falls between x0 and x1 and gradually increases. This indicates that the user moves in a direction of approaching the speaker. According to the sound pickup rule, the speaker may be determined as the sound pickup device. For another example, the host detects that the acoustic intensity feature of the camera falls between y0 and y1 and gradually decreases and the acoustic source feature of the camera falls between x4 and x5 and gradually increases. This indicates that the user moves in a direction from the camera to the television and is near the television. According to the sound pickup rule, the television may be determined as the sound pickup device.

In some embodiments, the host device may alternatively generate a sound pickup rule shown in Table 2 based on the feature maps obtained in the foregoing embodiments.

**Table 2**

| Moving direction of the user | Acoustic intensity feature (y) | Acoustic source feature (x) | Electronic device |
|---|---|---|---|
| Approaching the central control device | Central control device: y0 → y5 | Central control device: x8 → x7 | Central control device |
| Central control device → television (away from the central control device) | Central control device: y5 → y3 | Central control device: x7 → x6 | Central control device |
| | Television: y0 → y2 | Television: x7 → x6 | |
| Central control device → television (near the television) | Television: y3 → y6 | Central control device: x6 → x5 | Television |
| | Central control | | |
| | device: y2 → y0 | Television: x6 → x5 | |
| Television → camera (away from the television) | Television: y6 → y1 | Television: x5 → x4 | Television |
| | Camera: y0 → y1 | Camera: x5 → x4 | |
| Television → camera (near the camera) | Television: y1 → y0 | Television: x4 → x3 | Camera |
| | Camera: y1 → y4 | Camera: x4 → x3 | |
| Camera → speaker (away from the speaker) | Camera: y4 → y3 | Camera: x3 → x2 | Camera |
| Camera → speaker (near the speaker) | Speaker: y3 → y7 | Speaker: x2 → x1 | Speaker |
| | Camera: y3 → y0 | Camera: x2 → x1 | |
| Moving away from the speaker | Speaker: y7 → y0 | Speaker: x1 → x0 | Speaker |

For example, the host detects that the acoustic intensity feature of the television falls between y3 and y6 and gradually increases and the acoustic source feature of the television falls between x5 and x6 and gradually decreases. This indicates that the user moves in a direction from the central control device to the television and is near the television. According to the sound pickup rule shown in Table 2, the television may be determined as the sound pickup device. For another example, the host detects that the acoustic intensity feature of the camera falls between y3 and y4 and gradually decreases and the acoustic source feature of the camera falls between x2 and x3 and gradually decreases. This indicates that the user moves in a direction from the camera to the speaker and is away from the speaker. According to the sound pickup rule, the speaker may be determined as the sound pickup device.

In some embodiments, after determining the sound pickup device, the host device may send a sound pickup instruction to the sound pickup device, where the sound pickup instruction is used to instruct the sound pickup device to start sound pickup.

In some embodiments, after determining the sound pickup device and sending the sound pickup instruction to the sound pickup device, the host device may further send a sound pickup stop instruction to a non-sound-pickup device among the plurality of first electronic devices. After receiving the sound pickup stop instruction sent by the host device, the non-sound-pickup device stops sound pickup.

For example, all of the speaker, the camera, and the television detect the wake-up speech input by the user, and send acoustic features of the wake-up speech to the host device. After determining the television as a sound pickup device based on the acoustic features of the wake-up speech that are sent by the speaker, the camera, and the television, the host device may send a sound pickup instruction to the television, and send sound pickup stop instructions to the speaker and the camera. After receiving the sound pickup instruction, the television starts sound pickup. After receiving the sound pickup stop instructions, the speaker and the camera stop sound pickup.

In the foregoing example, the host device sends the sound pickup stop instruction to the non-sound-pickup device, and the non-sound-pickup device performs a sound pickup stop operation in response to the sound pickup stop instruction. This can prevent the non-sound-pickup device from being in a sound pickup state, and reduce power consumption of the non-sound-pickup device.

In some embodiments, after receiving the acoustic feature of the wake-up speech that is sent by the first electronic device, the host device may further determine a reply device from the plurality of electronic devices. The reply device is an electronic device for responding (for example, replying with "Yes?" or "How can I help?") to the first speech instruction (for example, wake-up speech) input by the user.

Optionally, with reference to the descriptions in the foregoing embodiments, after determining the sound pickup device based on the acoustic feature of the wake-up speech, the host device may determine the sound pickup device as the reply device.

Alternatively, the reply device may be preset on the host device. The reply device may be the first electronic device, or may not be the first electronic device. In addition, the reply device may be the sound pickup device, or may not be the sound pickup device. For example, the speaker may be preset as the reply device on the host. After the host device receives an acoustic feature of the wake-up speech that is sent by any first electronic device, although the first electronic device is not the speaker, the host may still determine the speaker as the reply device.

Alternatively, after receiving acoustic features of the wake-up speech that are sent by the plurality of first electronic devices, the host device may determine a first electronic device corresponding to the 1^{st} received acoustic feature of the wake-up speech as the reply device. For example, the host device receives, at 17:05:03, an acoustic feature of the wake-up speech that is sent by the speaker; receives, at 17:05:04, an acoustic feature of the wake-up speech that is sent by the speaker; and receives, at 17:05:05, an acoustic feature of the wake-up speech that is sent by the television. In this case, the host device may determine the speaker as the reply device.

In some embodiments, after determining the reply device, the host device sends a reply instruction to the reply device. After receiving the reply instruction sent by the host device, the reply device responds to the wake-up speech input by the user.

For example, after determining the speaker as the reply device, the host device sends a reply instruction to the speaker. After receiving the reply instruction sent by the host device, the speaker plays preset response speech, for example, "Yes?" or "What can I do for you?", to respond to the wake-up speech input by the user.

After receiving the sound pickup instruction input by the host device, the sound pickup device may start sound pickup to detect a task instruction input by the user.

In some embodiments, after hearing the response speech played by the reply device, the user may continue to input a task instruction. When the user is located within sound pickup ranges of the plurality of electronic devices, all of the plurality of electronic devices can detect the task instruction input by the user. However, before detecting the task instruction input by the user, a non-first electronic device among the plurality of electronic devices has not detected the wake-up speech input by the user. Therefore, none of non-first electronic devices among the plurality of electronic devices is in an awake state. Even if a non-first electronic device among the plurality of electronic devices detects the task instruction input by the user, the non-first electronic device ignores the task instruction, and does not send the task instruction to the host and/or a server.

In some embodiments, before detecting the task instruction input by the user, the non-sound-pickup device among the plurality of first electronic devices has detected the wake-up speech input by the user. However, before detecting the task instruction input by the user, the non-sound-pickup device among the plurality of first electronic devices has received the sound pickup stop instruction sent by the host device and has stopped sound pickup. Therefore, after detecting the task instruction input by the user, the non-sound-pickup device among the plurality of first electronic devices still ignores the task instruction, and does not send the task instruction to the host and/or the server.

In some embodiments, before detecting the task instruction input by the user, the sound pickup device has received the sound pickup instruction sent by the host device and has started sound pickup. Therefore, after detecting the task instruction input by the user, the sound pickup device may obtain an acoustic feature of the task instruction, and send the acoustic feature of the task instruction to the host device. In addition, the sound pickup device may send, to the server, the task instruction input by the user, so that the server parses semantics of the task instruction.

In some embodiments, the sound pickup device obtains the acoustic feature of the task instruction input by the user, and sends, to the host device, the acoustic feature of the task instruction input by the user. After receiving the acoustic feature of the task instruction that is sent by the sound pickup device, the host device may re-determine a sound pickup device based on the acoustic feature of the task instruction.

In some embodiments, when the acoustic feature of the task instruction includes an acoustic source feature and an acoustic intensity feature of the task instruction, the host device may re-determine a sound pickup device from the plurality of electronic devices based on the acoustic intensity feature and the acoustic source feature of the task instruction and a sound pickup rule. The sound pickup rule may include a correspondence between an acoustic intensity feature, an acoustic source feature, and the plurality of electronic devices. For descriptions of the sound pickup rule, refer to the foregoing embodiments. Details are not described herein again.

The task instruction is a segment of sound signal. Therefore, the task instruction may include a plurality of audio clips. For example, the task instruction includes a sound signal of a total of 5 seconds, and a sound signal of each second may be an audio clip. After receiving an audio clip of the task instruction input by the user, the sound pickup device may obtain an acoustic feature of the audio clip, and send the obtained acoustic feature to the host device. The host device may re-determine a sound pickup device based on the received acoustic feature.

In the foregoing process of repeatedly determining a sound pickup device, a previously determined sound pickup device may be considered as a second electronic device, and a re-determined sound pickup device may be considered as a third electronic device. The third electronic device obtained through re-determining may also serve as a second electronic device in a next process of re-determining a sound pickup device.

In some embodiments, if a sound pickup device re-determined by the host device and a sound pickup device used before the re-determining are a same electronic device, the sound pickup device may continue to pick up sound.

If a sound pickup device re-determined by the host device and a sound pickup device used before the re-determining are different electronic devices, the host device sends a sound pickup instruction to the re-determined sound pickup device, to instruct the re-determined sound pickup device to start sound pickup; and the host device sends a sound pickup stop instruction to the sound pickup device used before the re-determining, to instruct the sound pickup device used before the re-determining to stop sound pickup.

For example, when the user outputs the task instruction "Turn on the light in the bedroom (da kai wo shi de deng)", if an initial sound pickup device is the camera, the camera may detect in real time an audio clip of the task instruction input by the user, and obtain an acoustic feature of the detected audio clip. Refer to FIG. 14. After detecting an audio clip "Turn (da)" input by the user, the camera obtains an acoustic feature of the audio clip "Turn", and sends the acoustic feature of the audio clip "Turn" to the host device. The host device may re-determine a sound pickup device based on the acoustic feature of the audio clip "Turn" that is sent by the camera and the sound pickup rule. When the re-determined sound pickup device is still the camera, the camera may continue to pick up sound.

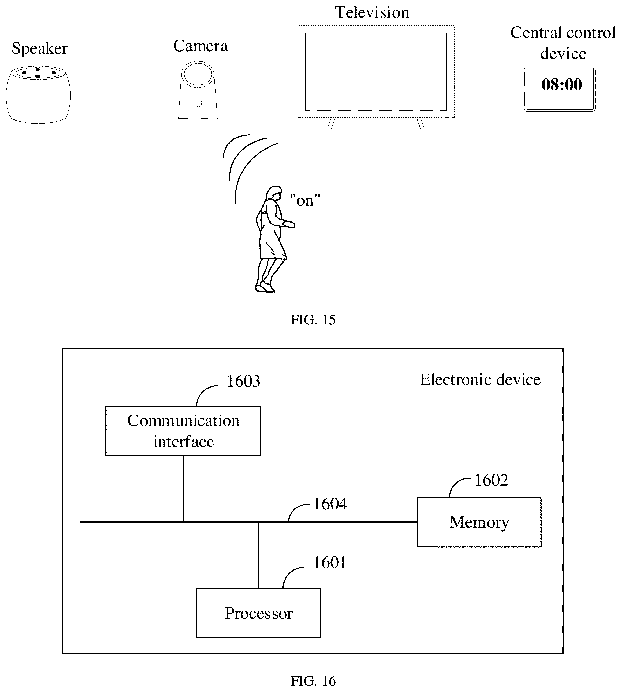

Then, refer to FIG. 15. If the camera detects an audio clip "on (kai)" input by the user, the camera may obtain an acoustic feature of the audio clip "on", and sends the acoustic feature of the audio clip "on" to the host device. The host device may re-determine a sound pickup device based on the acoustic feature of the audio clip "on" that is sent by the camera and the sound pickup rule. When the re-determined sound pickup device is not the camera but is another electronic device, for example, the re-determined sound pickup device is the television, the host device sends a sound pickup instruction to the television, to instruct the television to start sound pickup; and the host device sends a sound pickup stop instruction to the camera, to instruct the camera to stop sound pickup.

After receiving the sound pickup instruction sent by the host device, if detecting an audio clip "the bedroom (wo shi)" input by the user, the television obtains an acoustic feature of the audio clip "the bedroom", and sends the acoustic feature of the audio clip "the bedroom" to the host device. The host device may re-determine a sound pickup device based on the acoustic feature of the audio clip "the bedroom" that is sent by the television and the sound pickup rule.

Similarly, if the re-determined sound pickup device is still the television, the television may continue to serve as a sound pickup device to pick up sound. If the re-determined sound pickup device is not the television, for example, the re-determined sound pickup device is the central control device, the host device may send a sound pickup instruction to the central control device, to instruct the central control device to start sound pickup; and the host device may send a sound pickup stop instruction to the television, to instruct the television to stop sound pickup.

In the foregoing process of repeatedly determining a sound pickup device, an audio clip most recently collected by the sound pickup device may be considered as a second audio clip, and an audio clip previously collected by the sound pickup device may be considered as a first audio clip. The second audio clip most recently collected by the sound pickup device may also serve as a first audio clip in a next process of collecting a second audio clip by the sound pickup device. For example, when the sound pickup device collects the audio clip "Turn" and then collects the audio clip "on", the audio clip "Turn" may be considered as a first audio clip, and the audio clip "on" may be considered as a second audio clip. Then, when the sound pickup device collects the audio clip "the bedroom", the audio clip "the bedroom" may be considered as a second audio clip, and the audio clip "Turn" may be considered as a second audio clip. As the second audio clip changes, the host device may continuously determine a sound pickup device from the plurality of electronic devices based on an obtained acoustic feature of the second audio clip.

In some embodiments, after detecting an audio clip of the task instruction input by the user, the sound pickup device may further send, to the server, the audio clip of the task instruction input by the user. The server may splice a plurality of received audio clips of the task instructions to obtain the task instruction. Then the server may parse semantics of the task instruction, and determine, from the plurality of electronic devices based on the semantics of the task instruction that are obtained through parsing, an execution device for executing the task instruction.

For example, audio clips of the task instruction that are received by the server are "Turn", "on", "the light", and "in the bedroom". The server splices the plurality of received audio clips of the task instruction, and performs a speech-to-text conversion operation on a spliced audio clip to obtain the task instruction "Turn on the light in the bedroom". Then the server may parse semantics of the task instruction "Turn on the light in the bedroom", and determine that the execution device is "the light in the bedroom".

In some embodiments, after determining the sound pickup device, the host device may send a sound pickup identifier to the sound pickup device, and the host device may send sound pickup instructions to the sound pickup device and a non-sound-pickup device among the plurality of electronic devices. After receiving the sound pickup instructions sent by the host device, the sound pickup device and the non-sound-pickup device start sound pickup.

In some embodiments, after detecting an audio clip of the task instruction input by the user, the sound pickup device and the non-sound-pickup device may obtain acoustic features of the audio clip of the task instruction. Then the sound pickup device may associate an obtained acoustic feature of the audio clip of the task instruction with the sound pickup identifier sent by the host device. The sound pickup device sends the acoustic feature associated with the sound pickup identifier to the host device. The non-sound-pickup device may directly send an obtained acoustic feature of the audio clip of the task instruction to the host device. The acoustic feature sent by the non-sound-pickup device to the host device is not associated with the sound pickup identifier.

In some embodiments, after the host device receives the acoustic feature associated with the sound pickup identifier and the acoustic feature not associated with the sound pickup identifier, if the host device can re-determine a sound pickup device based on the acoustic feature associated with the sound pickup identifier, the host device re-determines a sound pickup device based on the acoustic feature associated with the sound pickup identifier. If the host device cannot re-determine a sound pickup device based on the acoustic feature associated with the sound pickup identifier, the host device may re-determine a sound pickup device based on the acoustic feature associated with the sound pickup identifier and the acoustic feature not associated with the sound pickup identifier, or the host device may re-determine a sound pickup device based on the acoustic feature not associated with the sound pickup identifier.

For a method for re-determining a sound pickup device by the host device, refer to the descriptions of determining, by the host device, a sound pickup device from the plurality of electronic devices in the foregoing embodiments. Details are not described herein again.

In some embodiments, after receiving the sound pickup identifier sent by the host device, the sound pickup device may associate a detected audio clip of the task instruction input by the user with the sound pickup identifier, and send, to the server, the audio clip of the task instruction that is associated with the sound pickup identifier. In addition, after detecting an audio clip of the task instruction input by the user, the non-sound-pickup device may also send, to the server, the audio clip of the task instruction input by the user. The audio clip of the task instruction that is sent by the non-sound-pickup device to the server is not associated with the sound pickup identifier.

In some embodiments, after the server receives audio clips of the task instruction that are associated with the sound pickup identifier and audio clips of the task instruction that are not associated with the sound pickup identifier, if the server can obtain the task instruction by splicing the audio clips of the task instruction that are associated with the sound pickup identifier, the server parses semantics of the task instruction, and determines an execution device based on the semantics of the task instruction.

If the server cannot obtain the task instruction by splicing the audio clips of the task instruction that are associated with the sound pickup identifier, the server may obtain the task instruction by splicing the audio clips of the task instruction that are associated with the sound pickup identifier and the audio clips of the task instruction that are not associated with the sound pickup identifier, or the server may obtain the task instruction by splicing the audio clips of the task instruction that are not associated with the sound pickup identifier. Then the server may parse semantics of the task instruction, and determine an execution device based on semantics of the first speech instruction.

In some embodiments, after the server determines the execution device, if detecting that a communication connection is established between the server and the execution device, the server may send an execution instruction to the execution device. The execution instruction includes the semantics of the task instruction that are obtained by the server through parsing. After receiving the execution instruction sent by the server, the execution device executes a corresponding task instruction based on the semantics of the task instruction that are obtained by the server through parsing.

For example, after the server determines that the execution device is "the light in the bedroom", if detecting that a communication connection is established between the server and "the light in the bedroom", the server may send an execution instruction to "the light in the bedroom", where the execution instruction includes semantics of the task instruction "Turn on the light in the bedroom". After receiving the execution instruction sent by the server, "the light in the bedroom" may execute a corresponding task instruction based on the semantics of the task instruction "Turn on the light in the bedroom", to respond to the task instruction "Turn on the light in the bedroom" input by the user, and improve user experience.

In some embodiments, after sending the execution instruction to the execution device, the server may send a reply instruction to a reply device. In response to the received reply instruction, the reply device responds to the task instruction input by the user (for example, the reply device plays "The light is on").

In some embodiments, the reply device may be the execution device, or the reply device may be the foregoing sound pickup device. This is not limited in this embodiment of this application. For a method for determining the reply device by the server, refer to the method for determining the reply device by the host device. Details are not described herein again.

In some embodiments, after determining the execution device, the server may send an identifier of the execution device and an execution instruction to the host device. The execution instruction includes the semantics of the task instruction that are obtained by the server through parsing. After receiving the identifier of the execution device and the execution instruction that are sent by the server, the host device may detect, based on the identifier of the execution device, whether the execution device has established a communication connection to the host device. If the host device detects an execution device that has established a communication connection to the host device, the host device may send an execution instruction to the execution device. After receiving the task execution sent by the host device, the execution device may execute a corresponding task instruction based on the semantics of the task instruction that are obtained by the server through parsing.

In some embodiments, after sending the task instruction to the execution device, the host device may send a reply instruction to the reply device. In response to the received reply instruction, the reply device responds to the task instruction input by the user (for example, the reply device plays "The light is on").

An embodiment of this application further provides a sound pickup method. The sound pickup method may be applied to the communication system shown in FIG. 3. The communication system includes a host device and a plurality of electronic devices with a speech interaction function. All of the electronic devices in the communication system may enter an awake state in response to same wake-up speech input by a user. The electronic device in the communication system may perform all of the steps that can be performed by the electronic device in the foregoing embodiments. The host device in the communication system may perform all of the steps that can be performed by the host device and the server in the foregoing embodiments. This is not limited in this embodiment of this application.

An embodiment of this application further provides a sound pickup method. The sound pickup method may be applied to the communication system shown in FIG. 4. The communication system includes a server and a plurality of electronic devices with a speech interaction function. All of the electronic devices in the communication system may enter an awake state in response to same wake-up speech input by a user. The electronic device in the communication system may perform all of the steps that can be performed by the electronic device in the foregoing embodiments. The server in the communication system may perform all of the steps that can be performed by the host device and the server in the foregoing embodiments. This is not limited in this embodiment of this application.

An embodiment of this application further provides a sound pickup method. The sound pickup method may be applied to a communication system including at least two electronic devices with a speech interaction function. All of the electronic devices in the communication system may enter an awake state in response to same wake-up speech input by a user. The electronic device in the communication system includes a primary device and a secondary device. The primary device and the secondary device in the communication system may perform all of the steps that can be performed by the electronic device in the foregoing embodiments. The primary device in the communication system may perform all of the steps that can be performed by the host device and the server in the foregoing embodiments. This is not limited in this embodiment of this application.

In some solutions, a plurality of embodiments of this application may be combined, and a combined solution is implemented. Optionally, some operations in the processes of the method embodiments are optionally combined, and/or a sequence of some operations is optionally changed. In addition, an execution sequence of steps of each process is merely an example, and does not constitute a limitation on an execution sequence of the steps. The steps may alternatively be performed in another execution sequence. The descriptions are not intended to indicate that the execution sequence is the only sequence of performing the operations. A person of ordinary skill in the art may figure out a plurality of manners of reordering the operations in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, other possible steps may be added to the method embodiments.

In addition, the method embodiments may be implemented separately or in combination.

It can be understood that, to implement the foregoing functions, an electronic device includes a corresponding hardware module and/or software module for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments. However, it should not be considered that the implementation goes beyond the scope of this application.

In this embodiment, the electronic device may be divided into functional modules based on the foregoing method examples. For example, each functional module may be obtained through division based on each corresponding function, or two or more functions may be integrated into one processing module. The integrated module may be implemented in a form of hardware. It should be noted that division into the modules in embodiments is an example, and is merely logical function division. During actual implementation, another division manner may be used.

An embodiment of this application further provides an electronic device. As shown in FIG. 16, the electronic device may include one or more processors 1601, a memory 1602, and a communication interface 1603.

The memory 1602 and the communication interface 1603 are coupled to the processor 1601. For example, the memory 1602 and the communication interface 1603 may be coupled to the processor 1601 through a bus 1604.

The communication interface 1603 is configured to perform data transmission with another device. The memory 1602 stores computer program code. The computer program code includes computer instructions. When the computer instructions are executed by the processor 1601, the electronic device is enabled to perform the sound pickup method in embodiments of this application.

The processor 1601 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to content of the present disclosure. The processor may alternatively be a combination for implementing a computing function, for example, a combination including one or more microprocessors, or a combination of a DSP and a microprocessor. The processor may be configured to support the electronic device in performing the method steps provided in the foregoing embodiments. For example, the processor may be configured to support the electronic device in performing S601 to S605 in FIG. 6.

The bus 1604 may be a peripheral component interconnect (Peripheral Component Interconnect, PCI) bus, an extended industry standard architecture (Extended Industry Standard Architecture, EISA) bus, or the like. The bus 1604 may be classified into an address bus, a data bus, a control bus, and the like. For ease of representation, only one bold line is used in FIG. 16 for representation, but this does not mean that there is only one bus or only one type of bus.

An embodiment of this application further provides a chip system, including a processor. The processor is coupled to a memory. The memory is configured to store a program or instructions. When the program or the instructions is/are executed by the processor, the chip system is enabled to implement the method in any one of the foregoing method embodiments.

Optionally, the chip system may include one or more processors. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory.

Optionally, the chip system may also include one or more memories. The memory may be integrated with the processor, or may be disposed separately from the processor. This is not limited in this embodiment of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be a field programmable gate array (field programmable gate array, FPGA), an application-specific integrated circuit (Application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

It should be understood that the steps in the foregoing method embodiments may be performed by an integrated logic circuit of hardware in the processor or by using instructions in a form of software. The steps of the methods disclosed with reference to embodiments of this application may be directly performed by a hardware processor, or may be performed by hardware in a processor in combination with a software module.

An embodiment of this application further provides a computer-readable storage medium. The computer-readable storage medium stores computer program code. When a processor executes the computer program code, an electronic device performs related method steps in the foregoing method embodiments.

An embodiment of this application further provides a computer program product. When the computer program product runs on a computer, the computer is enabled to perform related method steps in the foregoing method embodiments.

In addition, an embodiment of this application further provides an apparatus. The apparatus may be specifically a component or a module, and the apparatus may include one or more processors and a memory that are connected to each other. The memory is configured to store a computer program. When the computer program is executed by the one or more processors, the apparatus is enabled to perform the scenario configuration method in the foregoing method embodiments.

The apparatus, the computer-readable storage medium, the computer program product, or the chip provided in embodiments of this application is configured to perform a corresponding method provided above. Therefore, for beneficial effect that can be achieved, refer to the beneficial effect of the corresponding method provided above. Details are not described herein again.

Methods or algorithm steps described with reference to the content disclosed in embodiments of this application may be implemented by hardware, or may be implemented by a processor executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an application-specific integrated circuit (Application-specific integrated circuit, ASIC).

Based on the descriptions of the foregoing implementations, a person skilled in the art can clearly understand that, for ease and brevity of description, division into the foregoing functional modules is merely an example for description. During actual application, the foregoing functions may be allocated to different functional modules for implementation according to a requirement. To be specific, an inner structure of an apparatus is divided into different functional modules to implement all or some of the functions described above. For detailed working processes of the foregoing systems, apparatuses, and units, refer to corresponding processes in the foregoing method embodiments. Details are not described herein again.

In several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may be one or more physical units, to be specific, may be located in one place, or may be distributed in a plurality of different places. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A sound pickup method, comprising:
receiving, by at least one first electronic device among a plurality of electronic devices, a first speech instruction input by a user, and obtaining an acoustic feature of the first speech instruction;
obtaining, by a host device, at least one acoustic feature that is collected by the at least one first electronic device and that corresponds to the first speech instruction;
determining, by the host device, a sound pickup device from the plurality of electronic devices based on the at least one acoustic feature;
sending, by the host device, a sound pickup instruction to the sound pickup device; and
performing, by the sound pickup device, a sound pickup operation in response to the sound pickup instruction.

2. The method according to claim 1, wherein receiving, by the at least one first electronic device among the plurality of electronic devices, the first speech instruction input by the user, and obtaining the acoustic feature of the first speech instruction comprises:
during movement of the user, receiving, by the at least one first electronic device, the first speech instruction input by the user, and obtaining the acoustic feature of the first speech instruction;
obtaining, by the host device, the at least one acoustic feature that is collected by the at least one first electronic device and that corresponds to the first speech instruction comprises:
obtaining, by the host device, at least one acoustic feature that is collected by the at least one first electronic device during movement of the user and that corresponds to the first speech instruction; and
determining, by the host device, the sound pickup device from the plurality of electronic devices based on the at least one acoustic feature comprises:
determining, by the host device, the sound pickup device from the plurality of electronic devices sequentially based on the at least one acoustic feature.

3. The method according to claim 1 or 2, wherein after determining, by the host device, the sound pickup device from the plurality of electronic devices based on the at least one acoustic feature, the method further comprises:
sending, by the host device, a sound pickup stop instruction to a non-sound-pickup device among the plurality of electronic devices; and
performing, by the non-sound-pickup device, a sound pickup stop operation in response to the sound pickup stop instruction.

4. The method according to any one of claims 1 to 3, wherein the first speech instruction comprises wake-up speech, and after performing, by the sound pickup device, the sound pickup operation in response to the sound pickup instruction, the method further comprises:
receiving, by the sound pickup device, a second speech instruction input by the user, wherein the second speech instruction comprises a task instruction;
obtaining, by a server, the task instruction collected by the sound pickup device;
determining, by the server, an execution device from the plurality of electronic devices according to the task instruction;
sending, by the server, an execution instruction to the execution device; and
executing, by the execution device, the task instruction according to the execution instruction.

5. The method according to any one of claims 1 to 3, wherein the first speech instruction comprises a task instruction, and after receiving, by the at least one first electronic device among the plurality of electronic devices, the first speech instruction input by the user, the method further comprises:
obtaining, by a server, the task instruction collected by the at least one first electronic device;
determining, by the server, an execution device from the plurality of electronic devices according to the task instruction;
sending, by the server, an execution instruction to the execution device; and
executing, by the execution device, the task instruction according to the execution instruction.

6. The method according to any one of claims 1 to 5, wherein after obtaining, by the host device, the at least one acoustic feature that is collected by the at least one first electronic device and that corresponds to the first speech instruction, the method further comprises:
determining, by the host device, a reply device from the plurality of electronic devices;
sending, by the host device, a reply instruction to the reply device; and
performing, by the reply device, a reply operation in response to the reply instruction; or
after determining, by the host device, the sound pickup device from the plurality of electronic devices based on the at least one acoustic feature, the method further comprises:
sending, by the host device, a reply instruction to the sound pickup device; and
performing, by the sound pickup device, a reply operation in response to the reply instruction.

7. The method according to any one of claims 1 to 6, wherein the acoustic feature comprises at least one of an acoustic intensity feature and an acoustic source feature.

8. The method according to claim 7, wherein determining, by the host device, the sound pickup device from the plurality of electronic devices based on the at least one acoustic feature comprises:
determining, by the host device, the sound pickup device based on an acoustic intensity feature of the first speech instruction, an acoustic source feature of the first speech instruction, and a sound pickup rule.

9. The method according to claim 8, wherein before receiving, by the at least one first electronic device among the plurality of electronic devices, the first speech instruction input by the user, the method further comprises:
during movement of the user, receiving, by the plurality of electronic devices, a third speech instruction input by the user, and obtaining acoustic features of the third speech instruction;
obtaining, by the host device, a plurality of acoustic features that are collected by the plurality of electronic devices and that correspond to the third speech instruction; and
determining, by the host device, the sound pickup rule based on the plurality of acoustic features, wherein the sound pickup rule comprises a correspondence between a plurality of acoustic intensity features corresponding to the third speech instruction, a plurality of acoustic source features corresponding to the third speech instruction, and the plurality of electronic devices.

10. The method according to claim 9, wherein determining, by the host device, the sound pickup device from the plurality of electronic devices based on the at least one acoustic feature comprises:
determining, by the host device, a target acoustic source feature from the sound pickup rule, wherein the target acoustic source feature is the same as the acoustic source feature of the first speech instruction, and the target acoustic source feature corresponds to at least one first acoustic intensity feature;
determining, by the host device, a second acoustic intensity feature from the at least one first acoustic intensity feature, wherein the second acoustic intensity feature is the first acoustic intensity feature that meets a first preset condition; and
determining, by the host device, a target electronic device among the plurality of electronic devices that has a correspondence with the target acoustic source feature and the second acoustic intensity feature as the sound pickup device.

11. The method according to any one of claims 1 to 6, wherein the acoustic feature comprises an acoustic intensity feature, and determining, by the host device, the sound pickup device from the plurality of electronic devices based on the at least one acoustic feature comprises:
determining, by the host device based on a value of the acoustic intensity feature of the first speech instruction, a sound pickup device from the at least one first electronic device, wherein the sound pickup device is the first electronic device that sends, to the host device, an acoustic intensity feature of the first speech instruction that meets a second preset condition.

12. The method according to any one of claims 1 to 11, wherein when the first speech instruction comprises a task instruction, the task instruction comprises a first audio clip and a second audio clip;
receiving, by the at least one first electronic device among the plurality of electronic devices, the first speech instruction input by the user, and obtaining the acoustic feature of the first speech instruction comprises:
receiving, by the at least one first electronic device, the first audio clip input by the user, and obtaining an acoustic feature of the first audio clip;
obtaining, by the host device, the at least one acoustic feature that is collected by the at least one first electronic device and that corresponds to the first speech instruction comprises:
obtaining, by the host device, at least one acoustic feature that is collected by the at least one first electronic device and that corresponds to the first audio clip; and
determining, by the host device, the sound pickup device from the plurality of electronic devices based on the at least one acoustic feature comprises:
determining, by the host device, a second electronic device among the plurality of electronic devices as the sound pickup device based on the at least one acoustic feature corresponding to the first audio clip.

13. The method according to claim 12, wherein after sending, by the host device, the sound pickup instruction to the sound pickup device, the method further comprises:
receiving, by the second electronic device, the second audio clip input by the user, and obtaining an acoustic feature of the second audio clip;
obtaining, by the host device, the acoustic feature of the second audio clip that is collected by the second electronic device; and
determining, by the host device, the sound pickup device from the plurality of electronic devices based on the acoustic feature of the second audio clip.

14. The method according to claim 13, wherein after determining, by the host device, the sound pickup device from the plurality of electronic devices based on the acoustic feature of the second audio clip, the method further comprises:
if the host device determines the second electronic device as the sound pickup device, further performing, by the second electronic device, a sound pickup operation; or
if the host device determines a third electronic device among the plurality of electronic devices as the sound pickup device, sending, by the host device, the sound pickup instruction to the third electronic device, and sending, by the host device, a sound pickup stop instruction to the second electronic device;
performing, by the third electronic device, a sound pickup operation in response to the sound pickup instruction; and
performing, by the second electronic device, a sound pickup stop operation in response to the sound pickup stop instruction.

15. A sound pickup method, applied to a host device, and comprising:
obtaining at least one acoustic feature that is collected by at least one first electronic device among a plurality of electronic devices and that corresponds to a first speech instruction;
determining a sound pickup device from the plurality of electronic devices based on the at least one acoustic feature; and
sending a sound pickup instruction to the sound pickup device, to instruct the sound pickup device to perform a sound pickup operation.

16. The method according to claim 15, wherein obtaining the at least one acoustic feature that is collected by the at least one first electronic device among the plurality of electronic devices and that corresponds to the first speech instruction comprises:
obtaining at least one acoustic feature that is collected by the at least one first electronic device during movement of a user and that corresponds to the first speech instruction; and
determining the sound pickup device from the plurality of electronic devices based on the at least one acoustic feature comprises:
determining the sound pickup device from the plurality of electronic devices sequentially based on the at least one acoustic feature.

17. The method according to claim 15 or 16, wherein after determining the sound pickup device from the plurality of electronic devices based on the at least one acoustic feature, the method further comprises:
sending a sound pickup stop instruction to a non-sound-pickup device among the plurality of electronic devices, to instruct the non-sound-pickup device to perform a sound pickup stop operation.

18. The method according to any one of claims 15 to 17, wherein after obtaining the at least one acoustic feature that is collected by the at least one first electronic device among the plurality of electronic devices and that corresponds to the first speech instruction, the method further comprises:
determining a reply device from the plurality of electronic devices; and
sending a reply instruction to the reply device, to instruct the reply device to perform a reply operation; or
after determining the sound pickup device from the plurality of electronic devices based on the at least one acoustic feature, the method further comprises:
sending a reply instruction to the sound pickup device, to instruct the sound pickup device to perform a reply operation.

19. The method according to any one of claims 15 to 18, wherein the acoustic feature comprises at least one of an acoustic intensity feature and an acoustic source feature.

20. The method according to claim 19, wherein determining the sound pickup device from the plurality of electronic devices based on the at least one acoustic feature comprises:
determining the sound pickup device based on an acoustic intensity feature of the first speech instruction, an acoustic source feature of the first speech instruction, and a sound pickup rule.

21. The method according to claim 20, wherein before obtaining the at least one acoustic feature that is collected by the at least one first electronic device among the plurality of electronic devices and that corresponds to the first speech instruction, the method further comprises:
obtaining a plurality of acoustic features that are collected by the plurality of electronic devices during movement of the user and that correspond to a third speech instruction; and
determining the sound pickup rule based on the plurality of acoustic features, wherein the sound pickup rule comprises a correspondence between a plurality of acoustic intensity features corresponding to the third speech instruction, a plurality of acoustic source features corresponding to the third speech instruction, and the plurality of electronic devices.

22. The method according to claim 21, wherein determining the sound pickup device from the plurality of electronic devices based on the at least one acoustic feature comprises:
determining a target acoustic source feature from the sound pickup rule, wherein the target acoustic source feature is the same as the acoustic source feature of the first speech instruction, and the target acoustic source feature corresponds to at least one first acoustic intensity feature;
determining a second acoustic intensity feature from the at least one first acoustic intensity feature, wherein the second acoustic intensity feature is the first acoustic intensity feature that meets a first preset condition; and
determining a target electronic device among the plurality of electronic devices that has a correspondence with the target acoustic source feature and the second acoustic intensity feature as the sound pickup device.

23. The method according to any one of claims 15 to 18, wherein the acoustic feature comprises an acoustic intensity feature, and determining the sound pickup device from the plurality of electronic devices based on the at least one acoustic feature comprises:
determining, based on a value of the acoustic intensity feature of the first speech instruction, a sound pickup device from the at least one first electronic device, wherein the sound pickup device is the first electronic device that sends, to the host device, an acoustic intensity feature of the first speech instruction that meets a second preset condition.

24. The method according to any one of claims 15 to 23, wherein when the first speech instruction comprises a task instruction, the task instruction comprises a first audio clip and a second audio clip;
obtaining the at least one acoustic feature that is collected by the at least one first electronic device among the plurality of electronic devices and that corresponds to the first speech instruction comprises:
obtaining at least one acoustic feature that is collected by the at least one first electronic device and that corresponds to the first audio clip; and
determining the sound pickup device from the plurality of electronic devices based on the at least one acoustic feature comprises:
determining a second electronic device among the plurality of electronic devices as the sound pickup device based on the at least one acoustic feature corresponding to the first audio clip.

25. The method according to claim 24, wherein after sending the sound pickup instruction to the sound pickup device, the method further comprises:
obtaining an acoustic feature of the second audio clip that is collected by the second electronic device; and
determining the sound pickup device from the plurality of electronic devices based on the acoustic feature of the second audio clip.

26. The method according to claim 25, wherein after determining the sound pickup device from the plurality of electronic devices based on the acoustic feature of the second audio clip, the method further comprises:
if a third electronic device among the plurality of electronic devices is determined as the sound pickup device, sending the sound pickup instruction to the third electronic device, to instruct the third electronic device to perform a sound pickup operation, and sending a sound pickup stop instruction to the second electronic device, to instruct the second electronic device to perform a sound pickup stop operation.

27. A sound pickup method, applied to an electronic device, wherein the electronic device comprises a first electronic device, and the method comprises:
receiving a first speech instruction input by a user, and obtaining an acoustic feature of the first speech instruction; and
sending the acoustic feature of the first speech instruction to a host device.

28. The method according to claim 27, wherein receiving the first speech instruction input by the user, and obtaining the acoustic feature of the first speech instruction comprises:
during movement of the user, receiving the first speech instruction input by the user, and obtaining the acoustic feature of the first speech instruction.

29. The method according to claim 27 or 28, wherein after sending the acoustic feature of the first speech instruction to the host device, the method further comprises:
if a sound pickup instruction sent by the host device is received, performing a sound pickup operation as a sound pickup device in response to the sound pickup instruction.

30. The method according to claim 29, wherein after performing the sound pickup operation as the sound pickup device in response to the sound pickup instruction, the method further comprises:
if a sound pickup stop instruction sent by the host device is received, performing a sound pickup stop operation in response to the sound pickup stop instruction.

31. The method according to any one of claims 27 to 30, wherein the first speech instruction comprises wake-up speech, and after performing the sound pickup operation as the sound pickup device in response to the sound pickup instruction, the method further comprises:
receiving a second speech instruction input by the user, wherein the second speech instruction comprises a task instruction;
sending the task instruction to a server, to enable the server to determine an execution device according to the task instruction, and send an execution instruction to the execution device; and
if the execution instruction sent by the server is received, executing the task instruction as an execution device in response to the execution instruction.

32. The method according to any one of claims 27 to 30, wherein the first speech instruction comprises a task instruction, and after receiving the first speech instruction input by the user, and obtaining the acoustic feature of the first speech instruction, the method further comprises:
sending the task instruction to a server, to enable the server to determine an execution device according to the task instruction, and send an execution instruction to the execution device; and
if the execution instruction sent by the server is received, executing the task instruction as an execution device in response to the execution instruction.

33. The method according to any one of claims 27 to 32, wherein after sending the acoustic feature of the first speech instruction to the host device, the method further comprises:
if a reply instruction sent by the host device is received, performing a reply operation as a reply device in response to the reply instruction.

34. The method according to any one of claims 27 to 33, wherein the acoustic feature comprises at least one of an acoustic intensity feature and an acoustic source feature.

35. The method according to any one of claims 27 to 34, wherein when the first speech instruction comprises a task instruction, the task instruction comprises a first audio clip and a second audio clip;
receiving the first speech instruction input by the user, and obtaining the acoustic feature of the first speech instruction comprises:
receiving the first audio clip input by the user, and obtaining an acoustic feature of the first audio clip; and
sending the acoustic feature of the first audio clip to the host device.

36. The method according to claim 35, wherein after sending the acoustic feature of the first audio clip to the host device, the method further comprises:
before a sound pickup stop instruction sent by the host device is received, receiving, as a sound pickup device, the second audio clip input by the user, and obtaining an acoustic feature of the second audio clip; and
sending the acoustic feature of the second audio clip to the host device.

37. An electronic device, comprising a memory and one or more processors, wherein the memory is coupled to the processor, the memory stores computer program code, the computer program code comprises computer instructions, and when the computer instructions are executed by the processor, the electronic device is enabled to perform the sound pickup method according to any one of claims 1 to 14, or the electronic device is enabled to perform the sound pickup method according to any one of claims 15 to 26, or the electronic device is enabled to perform the sound pickup method according to any one of claims 27 to 36.

38. A computer-readable storage medium, comprising computer instructions, wherein when the computer instructions are run on an electronic device, the electronic device is enabled to perform the sound pickup method according to any one of claims 1 to 14, or the electronic device is enabled to perform the sound pickup method according to any one of claims 15 to 26, or the electronic device is enabled to perform the sound pickup method according to any one of claims 27 to 36.

39. A computer program product, wherein when the computer program product runs on a computer, the electronic device is enabled to perform the sound pickup method according to any one of claims 1 to 14, or the electronic device is enabled to perform the sound pickup method according to any one of claims 15 to 26, or the electronic device is enabled to perform the sound pickup method according to any one of claims 27 to 36.
